(19) Europäisches Patentamt
European Patent Office
Office européen des brevets

(11) **EP 1 939 968 A1**

(12) **EUROPEAN PATENT APPLICATION**
published in accordance with Art. 153(4) EPC

(43) Date of publication:
**02.07.2008 Bulletin 2008/27**

(51) Int Cl.:
*H01M 8/16* (2006.01)      *B09B 3/00* (2006.01)
*C02F 11/00* (2006.01)      *C02F 11/02* (2006.01)

(21) Application number: **06798360.1**

(22) Date of filing: **27.09.2006**

(86) International application number:
**PCT/JP2006/319152**

(87) International publication number:
**WO 2007/037261 (05.04.2007 Gazette 2007/14)**

(84) Designated Contracting States:
**DE NL**

(30) Priority: **28.09.2005   JP 2005282767**
**28.09.2005   JP 2005282772**
**28.09.2005   JP 2005282775**

(71) Applicant: **EBARA CORPORATION**
**Ohta-ku,**
**Tokyo 144-8510 (JP)**

(72) Inventors:
• **SHIMOMURA, Tatsuo**
**Fujisawa-shi, Kanagawa 2518502 (JP)**

• **ADACHI, Masanori**
**Fujisawa-shi, Kanagawa 2518502 (JP)**
• **MIYA, Akiko**
**Fujisawa-shi, Kanagawa  2518502 (JP)**

(74) Representative: **Wagner, Karl H. et al**
**WAGNER & GEYER**
**Patentanwälte**
**Gewürzmühlstrasse 5**
**80538 München (DE)**

(54) **BIOLOGICAL POWER PLANT, AND METHOD OF TREATING ORGANIC SOLID CONTAMINANT-CONTAINING WASTE, METHOD OF TREATING ORGANIC HIGH MOLECULAR SUBSTANCE-CONTAINING LIQUID WASTE AND METHOD OF TREATING ORGANIC SUBSTANCE-CONTAINING LIQUID WASTE BY USING THE BIOLOGICAL POWER PLANT, AND APPARATUS FOR CONDUCTING THESE METHODS**

(57)      Disclosed are a biological power generator comprising an anaerobic region containing microorganisms capable of growth under anaerobic conditions and an anode having an electron mediator immobilized thereon and having a standard electrode potential ($E_0$') in a range of -0.13 V to -0.28 V at pH 7, an aerobic region containing molecular oxygen and a cathode, and a diaphragm that defines the anaerobic region and the aerobic region, as well as a method of treating organic waste by making use of the biological power generator.

FIG. 3

**Description**

TECHNICAL FIELD

The present invention relates to a technology for treating wastewater and other waste that contain organic substances such as organic solid pollutants and organic polymeric substances (which are collectively named "organic waste"), as exemplified by livestock waste, wastewater, liquid waste, night soil, food waste, and sludge.

The present invention also relates to a technology in which an oxidation reduction reaction between organic matter in organic waste and oxygen in air is separated into an oxidation reaction involving anaerobic microorganisms and a reduction reaction of involving oxygen, to thereby generate electricity, as well as to a technology for treating wastewater and other waste by making use of a resulting action by which a feed under treatment is decomposed.

BACKGROUND ART

In the treatment of wastewater containing organic pollutants, widespread use has conventionally been made of aerobic biological processes. However, this method is not only energy-consuming but also presents a big problem with regard to disposal of excess sludge that contains large amounts of difficult-to-decompose organic matter. In contrast, to treat wastewater containing organic pollutants at high concentrations and organic sludge, much use of the anaerobic system has conventionally been made. This system has several advantages including: absence of a need to apply external power for aeration, thus leading to lower energy consumption; less production of excess sludge, thus resulting in lower costs of treatment; and, capability to recover methane gas which is useful as an energy resource.

Being the primary component of natural gas, methane is a fuel of good quality but since it is gaseous at ordinary temperature and pressure, it must be stored in a large gas tank; and in order to reduce its volume by pressure application or liquefaction, large or complicated equipment and a large amount of energy are required. Methane obtained by anaerobic treatment of organic wastewater or waste may be burned in a boiler and the like, but in the current situation, it is not assured that the resulting thermal energy will be effectively utilized. On the other hand, electrical power is a highly convenient form of energy which not only can be utilized to power various types of machines and equipment but can also be transported over a long distance.

To produce electrical power from fuels such as methane, a gas engine or turbine is conventionally used which converts chemical energy of the fuel to electrical energy via mechanical energy. But the efficiency of such methods varies depending on a scale of output power. For example, in a gas engine, in a case that large equipment with an output power of 2 MW, efficiency of conversion from the fuel's chemical energy to electrical energy is about 40%, whereas in small equipment with an output power of about 10 kW has a 20-25% efficiency. In a case of a gas turbine, equipment having a capacity of 100 MW has an efficiency of 30-35%, while that in the 1 MW class has an efficiency of 25-35%, and a micro-gas turbine with an output power of 30 kW has an efficiency of 15-30%. Thus, gas engines and turbines with smaller scales of output power have only low efficiency of conversion to electric power. Taking into allowance equipment maintenance and management costs, it is substantially difficult to recover energy without using large-scale equipment.

In recent years, fuel cell technology capable of direct conversion of a fuel's chemical energy to electric power has been making progress. The solid polymer electrolyte fuel cell (PEFC) which is the closest to commercial usability is capable of conversion to electric power at an efficiency of as high as 35-40% even in small equipment of 1 kW, and holds promise for use in many fields as decentralized power generating equipment. Since the efficiency of energy recovery with methane resulting from anaerobic treatment of organic wastewater and waste is about 60-70%, a system using the fuel cell is expected to offer an efficiency in electric power recovery of about 20-30%. However, in the case where a biogas obtained by anaerobic treatment of organic wastewater and waste is used for the starting material, the catalyst which is the key to power generation with the PEFC is poisoned by hydrogen sulfide or ammonia gas, and these impurities must be removed from the biogas to a level of 1 ppm or lower. The catalyst is also contaminated with carbon monoxide, and the carbon monoxide that is generated when methane is reformed to hydrogen has to be removed from the reformed gas to a level of 10 ppm or lower.

A method that makes use of microorganisms to produce electric current has been reported, in which electrons from an electron donor around an anode are imparted to an electron acceptor (mainly dissolved oxygen) around a cathode, with the anode and cathode being electrically connected to make a circuit, whereby an electric current is obtained (Patent Documents 1, 2 and 3). In another case, a method has been proposed to draw electrons efficiently by keeping microbes "starving" as they are constantly fed an insufficient amount of organic matter (Patent Document 4). In yet another case, a process for producing enzyme electrodes has been proposed, in which a redox compound as an electron mediator for an oxidizing-reducing enzyme is immobilized on an electrode (Patent Document 5). As a microbial cell technology utilizing an electron mediator, a method has been proposed, in which a hydrous organic substance or a decomposition product thereof is used as a substrate and an oxidation-reduction reaction between the substrate and oxygen is separated into an oxidation reaction by anaerobic microorganisms and a reduction reaction of oxygen, to thereby generate electricity (Patent Document 3 and Non-Patent Documents 1-3).

However, those methods are subject to a problem that the standard electrode potentials of the electron mediators they use do not overlap with the standard electrode potentials of final electron accepting substances for anaerobic microorganisms commonly used in the microbial cell reaction, and fail to form an effective potential cascade. The following Table 1 shows electron mediators proposed to date and their standard electrode potentials.

[Table 1]

Table 1 Standard Electrode Potentials of Various Electron Mediators

|  | Electron Mediator | Standard Electrode Potential $E_0'$ (V) |
|---|---|---|
| A | Thionine | +0.064 |
| B | Brilliant Cresyl Blue | +0.047 |
| C | $NAD^+$ | -0.32 |
| D | Neutral Red | -0.325 |
| E | Benzyl Viologen | -0.36 |
| F | Methyl Viologen | -0.36 |
| G | Ethyl Viologen | -0.45 |

Sulfur reducing bacteria and iron oxide(III) reducing bacteria, which are the anaerobic microorganisms employed in the common biological cell reaction use sulfur and iron as their respective final electron accepting substances, and the following Table 2 shows their respective standard electrode potentials.

[Table 2]

Table 2 Standard Electrode Potentials of Final Electron Accepting Substances for Anaerobic Microorganisms

| Final Electron Accepting Reaction | Standard Electrode Potential $E_0'$ (V) |
|---|---|
| $O_2/H_2O$ | +0.82 |
| Fe(III)/Fe(II) | +0.20 |
| $S(O)/H_2S$ | -0.28 |

As can be seen from Table 2, the terminal reducing enzyme (sulfur reducing enzyme) in the electron transfer system possessed by sulfur reducing bacteria can reduce substances having a standard electrode potential of -0.28 V, whereas the terminal reducing enzyme (iron oxide (III) reducing enzyme) in the electron transfer system possessed by iron oxide (III) reducing bacteria can reduce substances having a standard electrode potential of +0.20 V. These terminal reducing enzymes are found in the outer membrane or periplasm of microorganisms and since they are capable of reducing extracellular iron oxide or zero valent sulfur, these enzymes can be effective catalysts for efficient biological power generation. However, as shown in Table 1, the standard electrode potentials of the electron mediators proposed to date are such that all of the electron mediators A to G have standard electrode potentials lower than that required for reducing iron, and thus an effective potential cascade cannot be formed between the iron oxide (III) reducing enzyme, the electron mediator, and the anode. Similarly, the electron mediators C to G shown in Table 1 have standard electrode potentials lower than that required for reducing sulfur, so no effective potential cascade can be formed between the sulfur reducing enzyme, the electron mediator, and the anode. The electron mediators A and B shown in Table 1 have standard electrode potentials higher than that required for reducing sulfur, so it is theoretically possible to perform reduction with the sulfur reducing enzyme but given a potential difference greater than 0.3 V, biological electron transfer is highly likely to be problematic. In addition, in order to enhance efficiency of power generation, it is required to produce a greatest possible potential difference in the oxygen reducing reaction at the cathode. However, with high potentials of electron mediators, a potential difference greater than 0.3 V is lost, leading to a substantial energy loss.

Under these circumstances, an attempt has been made whereby in a microbial cell system using sulfur reducing bacteria, to improve an efficiency of electron transfer there is added to the anode compartment anthraquinone-2,6-disulfonic acid (AQ-2,6-DS) (Non-Patent Document 2). AQ-2,6-DS has a standard electrode potential of -0.185 V and is considered to be a suitable substance for forming an effective potential cascade between the sulfur reducing enzyme and the electron mediator. However, in the proposed system, AQ-2,6-DS was simply added to the liquid phase and not immobilized on the anode (oxidizing electrode),and consequently its reactivity with the electrode was low, and the effect of its addition was no more than a 24% increase in the value of electric current. A further problem arises in the case of continuous power generation in that when the substrate solution in the anode compartment is replaced, the electron mediator is also discharged to the outside of the system, making it necessary for the electron mediator to be added constantly.

Since at least some of the microorganisms in the class of sulfur reducing bacteria and iron oxide (III) reducing bacteria are to some extent capable of transferringelectrons directly to an electrode even in an environment having no electron mediator, there has been proposed a microbial cell technology that does not use any electron mediator (Patent Document 6). This method has an advantage in that there is no need to retain any electron mediator within the system but, on the other hand, failure to perform efficient electron transfer from the microorganism to the electrode makes it impossible to increase the current density. As a result, it has been difficult, in practice, to obtain sufficient rates of power generation.

Patent Document 1: Official Gazette of JP 2000-133327 A
Patent Document 2: Official Gazette of JP 2000-133326 A
Patent Document 3: Official Gazette of JP 2002-520032 A
Patent Document 4: Specification of U.S. Patent 4652501
Patent Document 5: Official Gazette of JP 57-69667 A
Patent Document 6: Official Gazette of Japanese Patent 3022431 Non-Patent Document 1: Roller et al., 1984, Journal of Chemical Technology and Biotechnology 34B: 3-12
Non-Patent Document 2: Bond et al., 2002, SCIENCE 295:483-485 Non-Patent Document 3: Park et al., 2000, Biotechnology Letters 22:1301-1304
Non-Patent Document 4: Atsuharu Ikeda, Book of Abstracts for the 31st Seminar on New Ceramics, 2004.

DISCLOSURE OF THE INVENTION

MEANS FOR SOLVING THE PROBLEMS

In order to solve the object of obtaining sufficient rates of power generation, the present invention provides a power generating method characterized in that: one electrode which is an anode having an electron mediator immobilized thereon and having a standard electrode potential ($E_0$') in a range of -0.13 V to -0.28 V at pH 7 and another electrode which is a cathode are electrically connected to form a closed circuit; the anode is brought into contact with microorganisms capable of growth under anaerobic conditions, and into contact with a solution or suspension containing organic substances so that an oxidation reaction involving microorganisms that use the organic substances as an electron donor is allowed to proceed; the cathode and the solution or suspension are separated by an electrolyte membrane so that a reduction reaction that uses oxygen as an electron acceptor is allowed to proceed at the cathode; the oxidation reaction in the biological reaction system is thus promoted to generate electricity. The present invention also provides an apparatus for implementing this power generating method.

The present inventors have found that when wastewater or waste that contains solid or liquid organic pollutants, as exemplified by livestock waste, night soil, food waste, sludge, and wastewater (herein sometimes collectively referred to as "organic waste") are utilized as an electron donor for anaerobic microorganisms in the above-described biological power generating method and apparatus, an environmental impact of such organic wastewater and waste can be reduced and, at the same time, a chemical energy possessed by the organic matter in organic wastewater and waste can be directly converted to electric power without any need for an intervening energy converter, and also without any need for peripheral equipment such as a gas tank or reformer, whereby an added advantage is realized such that a treatment is also provided for purifying waste-containing organic pollutants.

The object of the present invention is to provide a treating method and apparatus that employ the above-mentioned biological power generating technology to ensure that an environmental impact of organic waste can be efficiently reduced while, at the same time, electrical energy is obtained.

More specifically, the object of the present invention is to provide a treating method and apparatus which, when treating organic solid pollutant-containing waste by utilizing biological power generating technology, are capable of efficiently converting organic solid pollutants to solubilized organic substances that are relatively easier to treat.

Another object of the present invention is to provide a treating method and apparatus which, when used for treating organic solid pollutant-containing waste in utilizing biological power generating technology, are capable of efficiently converting organic polymeric substances to organic substances that have been reduced in molecular weight, and which are easier to treat.

A further object of the present invention is to provide a method and apparatus for treating organic pollutants, by which the treated water as obtained from a biological power generator is further treated to ensure that a biological oxygen demand (BOD) of less than 120 mg/L which is the uniform standard for emission (daily average) specified by the Water Pollution Prevention Law can be achieved consistently.

The present invention relates to a technology for treating waste and wastewater containing organic substances such as organic solid pollutants or organic polymeric substances (organic waste) by making use of a biological power generator and it particularly relates to a technology for treating organic waste by decomposing organic substances while generating electric power by an oxidation-reduction reaction between organic substances in the organic waste and oxygen in the air being separated into an oxidation reaction by anaerobic microorganisms and a reduction reaction of oxygen.

According to the present invention, it is provided that a biological power generator comprising an anaerobic region containing microorganisms capable of growth under anaerobic conditions and an anode having an electron mediator immobilized thereon and having a standard electrode potential ($E_0$') in a range of -0.13 V to -0.28 V at pH 7, an aerobic region containing molecular oxygen and a cathode, and a diaphragm that defines the anaerobic region and the aerobic region, as well as a method of treating organic waste by making use of this biological power generator.

The anode having an electron mediator immobilized thereon is preferably such that at least one electron mediator selected from the group consisting of anthraquinone derivatives, naphthoquinone derivatives, benzoquinone derivatives, and isoalloxazine derivatives is immobilized on an electrode substrate; more preferably, the electron mediator is a substance selected from the group consisting of anthraquinone carboxylic acids (AQC), aminoanthraquinones (AAQ), diaminoanthraquinones (DAAQ), anthraquinone sulfonic acids (AQS), diaminoanthraquinone sulfonic acids (DAAQS), anthraquinone disulfonic acids (AQDS), diaminoanthraquinone disulfonic acids (DAAQ DS), ethyl anthraquinones (EAQ), methyl naphtoquinones (MNQ), methyl aminonaphtoquinones (MANQ), bromomethyl aminonaphtoquinones (BrMANQ), dimethyl naphtoquinones (DMNQ), dimethyl aminonaphtoquinones (DMANQ), lapachol (LpQ), hydroxy(methylbutenyl) aminonaphthoquinones (AlpQ), naphthoquinone sulfonic acids (NQS), trimethyl aminobenzoquinones (TMABQ), flavin mononucleotide (FMN), and derivatives thereof, as exemplified by anthraquinone-2-carboxylic acid (AQ-2-C), 1-aminoanthraquinone (AAQ), 1,5-diaminoanthraquinone (1,5-DAAQ), anthraquinone-2-sulfonic acid (AQ-2-S), 1,5-diaminoanthraquinone-2-sulfonic acid (1,5-DAAQ-2-S), anthraquinone-2,6-disulfonic acid (AQ-2,6-DS), anthraquinone-2,7-disulfonic acid (AQ-2,7-DS), anthraquinone-1,5-disulfonic acid (AQ-1,5-DS), 1,5-diaminoanthraquinone disulfonic acid (1,5-DAAQDS), 2-ethyl anthraquinone (2-EAQ), 2-methyl-1,4-naphthoquinone (2-M-1,4-NQ), 2-methyl-5-amino-1,4-naphthoquinone (2-M-5-A-1,4-NQ), 2-bromo-3-methyl-5-amino-1,4-naphthoquinone (2-Br-3-M-5-A-1,4-NQ), 2,3-dimethyl-1,4-naphthoquinone (2,3-DM-1,4-NQ), 2,3-dimethyl-5-amino-1,4-naphthoquinone (2,3-DM-5-A-1,4-NQ), lapachol (LpQ), 2-hydroxy-3-(3-methyl-2-butenyl)-5-amino-1,4-naphthoquinone (AlpQ), 1,2-naphthoquinone-4-sulfonic acid (1,2-NQ-4-S), 2,3,5-trimethyl benzoquinone (2,3,5-TMABQ), flavin mononucleotide (FMN), and derivatives thereof.

The electrode material that forms the anode in the biological power generator is preferably exemplified by porous material having electrical conductivity and specific preferred examples include porous graphite, carbon paper, graphite cloth, graphite felt, activated carbon fibers, molded carbon black, molded carbon nanotubes, molding of vapor-deposited carbon fiber, etc.

To immobilize the above-mentioned electron mediators on the electrode, it is preferred to use immobilizing methods that will neither inhibit the oxidizing and reducing capabilities of the electron mediators nor cause significant variations in the standard electrode potentials of the electron mediators. Desirably, bonding between the electron mediator and the electrode takes such a form that it is stable and will not be readily decomposed in an aqueous environment. It is also desirable that the electron mediator and the electrode are bonded in such a form as to provide electrical conductivity. However, in so far as a distance between the electron mediator and the electrode is no more than 200 Å, they need not be bonded directly, since electrons are capable of moving such a distance, and, hence, electrical conductivity can be maintained. If desired, functional groups may be introduced into either the electron mediator or the electrode substrate, or both, to immobilize the electron mediator on the electrode. The electron mediator may first be polymerized by making use of electrolytic polymerization or chemical polymerization before it is immobilized on the electrode substrate. Alternatively, the electron mediator may be polymerized after it is immobilized on the electrode. If desired, electrically conductive fibers may be formed on the electrode and the electron mediator is then immobilized on the conductive fibers. As immobilizing methods that satisfy these conditions, bonding methods shown in the following Table 3 and Table 4 are preferably employed.

[Table 3]

Table 3 Method of Bonding Various Electrodes to Electron mediators

| Electrode Material or Coating Material | Functional Group of Electrode | | Functional Group of Electron Mediator | Bonding Mode |
|---|---|---|---|---|
| Graphite | Carboxyl group Carboxyl group | | Amino group Amino group | Amide bonding or Imide bonding |
| | Amino group | | Carboxyl group | Amide bonding |
| | | | Sulfonic acid group | Sulfonamide bonding |
| | Hydroxyl group | | Bromomethyl group | Ether bonding |
| | | | Phosphoric acid group | Phosphate bonding |
| | | | Phosphonic acid group | Phosphonate bonding |
| Gold or Platinum | None | | Thiol group (introduced to carboxyl group by ester bonding) | |
| | | | Thiol group (introduced to sulfonic acid group by ester bonding) | |
| | | | Thiol group (introduced to hydroxyl group by ether bonding) | Gold- or Platinum- sulfur bonding |
| | | | Thiol group (introduced to amino group) | |
| | | | Dithiol group (introduced to phosphoric acid group by diester bonding) | |
| Metal oxides (TiO$_2$, SnO$_2$ etc.) | Silane coupler modification | | | |
| | | Amine-containing silane coupler | Carboxyl group | Amide bonding |
| | | | Sulfonic acid group | Sulfonamide bonding |
| | | Halogen- containing silane coupler | Hydroxyl group | Ether bonding |
| | | | Amino group | C-N bonding |
| | | Hydroxyl group-containing silane coupler | Phosphoric acid group | Phosphate bonding |

[Table 4]

Table 4 Methods of Polymerizing Electron Mediators

| System | Structure of electron transfer medium | Polymerization (layer formation) method | Method of hydrophilization after polymerization |
|---|---|---|---|
| a | Anthraquinone derivatives Naphthoquinone derivatives Benzoquinone derivatives | Nitro group introduced → reduced for conversion to amino → to the reaction system of b Carboxyl group or sulfonic acid group introduced → to the reaction system of c or d | Sulfonic acid groups introduced by means of fuming sulfuric acid, conc. sulfuric acid, chlorosulfonic acid, $SO_3$ gas, or sulfurous acid |
| b | (Di)aminoanthraquinone derivatives Aminonaphthoquinone derivatives Aminobenzoquinone derivatives | Electrolytic polymerization | |
| c | Anthraquinone carboxylic acid derivatives Anthraquinone (di)sulfonic acid derivatives Naphthoquinone sulfonic acid derivatives | Acid chloride formed → (sulfone)amide bonding to pyrrole →electrolytic polymerization | |
| d | Anthraquinone carboxylic acid derivatives Anthraquinone (di)sulfonic acid derivatives | Acid chloride formed → (sulfone)amide bonding to polyethyleneimine → adsorbed on the anode | |

Accordingly, in order to immobilize the electron mediator on the electrode substrate in the present invention, a suitable bonding method may be selected from among the methods shown in Table 3 and Table 4 depending on a combination of the electrode substrate and electron mediator to be used.

In a power generator to be used in the present invention, at least part of the cathode is preferably made of an electrically conductive porous material, net-like or fibrous material that contain voids in their structure, with an interface between the water containing hydrogen ions, the air, and electrons, namely, a site where air (oxygen), hydrogen ions and electrons are enabled to be adjacent to one another, being constructed in these voids. In this way, efficiency of contact with oxygen in the air and water at the water surface can be enhanced to promote a reduction reaction (electrode reaction) of oxygen in air. For instance, if an electrically conductive porous material having fine pores and that has electrically conductive particles (e.g., carbon, inert metal, or metal oxide) bound thereto by means of a binder resin is used as a cathode, water can be effectively drawn up by capillarity, hydrophilization action at the surface, and so on, to form a water/air contact interface within the fine pores, whereupon oxygen in the air and in the water make efficient contact to promote a reduction reaction of oxygen. The electrode substrate for use as the cathode is preferably exemplified by porous graphite, carbon paper, graphite cloth, graphite felt, activated carbon fibers, molded carbon black, molded carbon nanotubes, moldings of vapor-deposited carbon fiber, etc.

Furthermore, it is preferred that a catalyst comprising an alloy or compound containing at least one species selected from among platinoid elements, silver and transition metal elements is supported on the cathode and this contributes to promoting the reduction reaction (electrode reaction) of the oxygen in the air. The term "platinoid elements" refers to platinum (Pt), ruthenium (Ru), rhodium (Rh), palladium (Pd), osmium (Os) or iridium (Ir) and any of these is effective as an electrode catalyst. Those which support a silver powder doped with nickel (Ni), bismuth (Bi) or titanium oxide, or those having silver supported on furnace black or colloidal graphite, or those which use iron (Fe), cobalt (Co), phthalocyanine, hemin, perovskite, $Mn_4N$, a metal porphyrin, $MnO_2$, a vanadate or $Y_2O_3$-$ZrO_2$ composite oxide can also be preferably used as electrode catalysts.

An anion-exchange membrane may also be used as a diaphragm in the biological power generator of the present invention to separate the anaerobic region from the aerobic region. A specific preferred example is a hydroxide ion-exchange membrane having ammonium hydroxide groups. Examples that can also preferably be used as such an anion-exchange membrane include commercial products such as NEPTON AR103PZL-389 manufactured by IONICS, NEOSEPTA ALE manufactured by Tokuyama, and Selemion ASV manufactured by Asahi Glass. In this case, if anionic organic substances such as organic acids that occur in the anaerobic region pass through the diaphragm into the aerobic region (a phenomenon called "cross flow"), oxygen is consumed there and organic matter is oxidized in vain. While, at the same time, aerobic microorganisms will proliferate in the aerobic region and thereby contaminate the cathode. Hence, the anion-exchange membrane to be used desirably works as a molecular sieve that will not easily transmit anions such as acetic acid that have molecular weights in excess of 60. An example of an anion-exchange membrane having such a property is NEOSEPTA ALE04-4A-0006 membrane manufactured by Astom.

Further examples of the diaphragm that can be installed in the biological power generator of the present invention are those having no functional groups, including MF (micro-filter) and UF (ultra-filter) membranes, porous filter media such as ceramics and sintered glass, and woven fabrics made of nylon, polyethylene, polypropylene, etc. These diaphragms having no functional groups are preferably such that they have pore diameters of no more than 5 $\mu$m and are gas-impermeable with no pressure applied. Examples that can be preferably used are PE-10 membrane manufactured by Schweiz Seidengazefabrik and NY1-HD membrane manufactured by Flon Industry.

In the biological power generator to be used in the present invention, the anode and the cathode are electrically connected to form a closed circuit. On the other hand, to exploit a reducing capability of organic substances as electrical energy without waste, the two electrodes must be separated to prevent contact occurring between the organic substances and oxygen in the air, so that the organic substances will not consume their reducing capability upon contact with the oxidant (the substance to be reduced), namely, oxygen in the air. To satisfy these conditions simultaneously, the cathode is desirably separated from electrode-active microorganisms and the solution or suspension containing the organic substances by use of a diaphragm, for instance, a solid polymer electrolyte membrane. By adopting this structure, the cathode can readily contact with oxygen in the air while, at the same time, supply of hydrogen ions to and from the cathode or discharge of hydroxide ions can be achieved via water in the diaphragm. In addition, the diaphragm is preferably such that a minimal amount of oxygen in the air can permeate through it.

Examples of the diaphragm that are preferably used include a perfluorinated ion-exchange membrane (cation-exchange membrane) with sulfonic acid groups that is hydrophilic and has high cation-exchange capability and a hydroxide ion-exchange membrane (anion-exchange membrane) having a quaternary ammonium salt. A perfluorinated ion-exchange membrane that has only the backbone chain fluorinated and an aromatic hydrocarbon membrane may be utilized as less costly diaphragms. Examples that can preferably be used as such ion-exchange membranes include commercial products such as NEPTON CR61AZL-389 manufactured by IONICS, NEOSEPTA CM-1 or CMB manufactured by Tokuyama, Selemion CSV manufactured by Asahi Glass, NEPTON AR103PZL manufactured by IONICS, NEOSEPTA AHA manufactured by Tokuyama, and Selemion ASV manufactured by Asahi Glass. The cation-exchange membrane can be used to ensure that the hydrogen ions and water that are necessary to reduce oxygen at the cathode are supplied from the anode to the cathode, and the anion-exchange membrane can be used to ensure that the hydroxide ions generated from the reaction between water and oxygen are supplied from the cathode to the anode.

It is preferred that the biological power generator used in the present invention further includes a mechanism that controls the pH of the liquid under treatment within the anaerobic region (which may be preliminarily solubilized or reduced in molecular weight, as will be described later). An applicable pH control mechanism is a common pH control mechanism comprising a pH meter for measuring the pH of the liquid under treatment, a control mechanism for controlling the supply of an alkaline chemical based on the result of measurement with the pH meter, and an alkaline chemical reservoir for holding the alkaline chemical. By controlling a drop of the pH of the liquid under treatment within the anaerobic region, the reduced mediator at the anode can be prevented from suffering a drop in the rate of an oxidation reaction, and a large current density can be obtained even in a continuous operation. The pH within the anaerobic region is preferably maintained to within a range of 10.5 to 6.5, more preferably to a range of 9.5 to 6.5, and most preferably to a range of 9.0 to 7.5. By controlling the pH drop in such a way that the pH is maintained within these ranges, a drop in a rate of oxidation reaction at the anode can be inhibited. It to be noted also that many of the enzymes possessed by microorganisms have optimum pHs near neutrality, and that too strong an alkalinity may inhibit a reduction reaction of the microorganisms. An alkaline substance that can be used in the treating apparatus of the present invention to effect pH control within the anaerobic region of the biological power generator may be any substance that shows alkalinity in aqueous solution; and preferred examples include alkali metals, alkaline earth metals, as well as hydroxides thereof, salts consisting of a strong base and a weak acid, and ammonia. Also applicable are substances of high alkalinity that show a neutral to weakly alkaline pH in aqueous solution, but whose aqueous solutions have a buffer action. Preferred examples include borates, phosphates, carbonates, and the like. When the substances mentioned above are to be used as alkaline substances, two or more of them may be added simultaneously.

Anaerobic microorganisms that can be used within the anaerobic region of the biological power generator in the present invention are desirably microorganisms that can transfer electrons to an extracellular substance so as to permit final electron transfer to the electrode (such microorganisms are hereinafter referred to as "electrode-active microorganisms"). Preferred examples of such electrode-active microorganisms with respect to the anode include sulfur S(0) reducing bacteria, iron oxide(III) Fe(III) reducing bacteria, manganese dioxide ($MnO_2$) reducing bacteria, and dechlorinating bacteria. Particularly preferred examples of such microorganisms include Desulfuromonas sp., Desulfitobacterium sp., Clostridium thiosulfatireducens, Acidithiobacillus sp., Geothrix sp., Geobacter sp., and Shewanella putrefaciens. In particular, sulfur-reducing bacteria are such that their final electron acceptor sulfur has a very low standard electrode potential at -0.28 V, so they can transfer electrons to electron mediators having lower potentials than iron oxide(III) reducing bacteria, and hence are advantageous in terms of energy. Microorganisms that have such sulfur-reducing activity and which are preferably used include, for example, Desulfuromonas sp., Desulfitobacterium sp., Clostridium thiosulfatireducens sp., and Acidithiobacillus sp. Many of the above-mentioned electrode-active microorganisms are known to be such that monosaccharides, for instance, glucose or low-molecular weight organic acids, for instance, lactic acid can be utilized as a substrate (Non-Patent Document 4).

The present invention also relates to an apparatus and a method for treating organic waste by making use of the above-described biological power generator.

A first aspect of the present invention which relates to the treatment of organic waste is especially characterized by conversion of organic solid pollutants to solubilized organic substances before they are fed into the biological power generator.

A second aspect of the present invention which relates to the treatment of organic waste is especially characterized by converting organic polymeric substances to organic substances reduced in molecular weight before they are fed into the biological power generator.

A third aspect of the present invention which relates to the treatment of organic waste is characterized by including a post-treatment in which the primary treated water as obtained by primary treatment with the biological power generator is further treated.

<Treatment for Solubilizing Organic solid pollutant-containing Waste>

According to the first aspect of the present invention for treating organic waste, there is provided a method of treating organic solid pollutant-containing waste by making use of a biological power generator comprising an anaerobic region containing microorganisms capable of growth under anaerobic conditions and an anode having an electron mediator immobilized thereon and having a standard electrode potential ($E_0$') in the range of -0.13 V to -0.28 V at pH 7, an aerobic region containing molecular oxygen and a cathode, and a diaphragm that defines the anaerobic region and the aerobic region, characterized by comprising: a solubilizing step in which the organic solid pollutants in the organic solid pollutant-containing waste are solubilized to form a solubilized liquid under treatment which contains solubilized organic substances; and a biological power generation step in which the solubilized liquid under treatment is fed into the anaerobic region of the biological power generator so that the oxidization reaction by the microorganisms which use the solubilized organic substances within the anaerobic region as an electron donor and the reduction reaction which uses the oxygen within the aerobic region as an electron acceptor are allowed to proceed to thereby reduce a pollution load in the solubilized liquid under treatment while generating electricity.

The organic solid pollutant-containing waste may be any wastewater and waste that contain solid organic matter and examples include residues from food processing such as wastewater from food processing plants, coffee grounds, waste brewer's yeast, and bean curd refuse, as well as leftover food (garbage), waste paper, animal waste, night soil, and excess sludge from water treatment facilities. These organic solid pollutant-containing waste may be immediately subjected to the solubilizing treatment but if desired, the organic solid pollutant-containing waste may be preliminarily subjected to solid-liquid separation and the resulting liquid fed into the anaerobic region of the biological power generator or, alternatively, they may be treated to have a smaller molecular weight and only the solids subjected to the solubilizing treatment.

Therefore, the treatment method under consideration comprises solubilizing organic solid pollutants in organic solid pollutant-containing waste into solubilized organic substances such as soluble substances, suspendable substances (suspension) or slurries, feeding the anaerobic region of the biological power generator with the liquid under treatment which contains the thus solubilized organic substances (hereinafter referred to as the "solubilized liquid under treatment"), and allowing the solubilized organic substances to act as a substrate for electrode-active microorganisms. In the present invention, "solubilized organic substances" refers to a solute that cannot be easily separated from a medium, and it is intended to embrace a solute in a solution but also a dispersoid in a dispersion, suspended matter in a suspension, and fine solids in a slurry. The degree of solubilisation can be expressed in terms of an increase in $COD_{Cr}$ concentration of the soluble fraction of the liquid under treatment as compared with an initial level before the solubilizing treatment (which is a supernatant obtained by a centrifugal operation at 10000 revolutions per minute for 10 minutes); preferably, the organic substances can be said to have been solubilized when the $COD_{Cr}$ concentration has increased by at least about 20%.

In the treatment method of the present invention, the solubilizing treatment is preferably performed by subjecting the organic solid pollutant-containing waste to at least one method selected from among mechanical crushing, physical treatment, thermal treatment, acid or alkali treatment, oxidizing treatment, and hydrothermal electrolytic treatment. For mechanical crushing treatment, a method such as crushing on a mill or stone mortar or crushing by sonication can preferably be used. For physical treatment, a method such as steaming or blasting can preferably be used. For the thermal treatment, a heat treatment may be applied in an atmosphere at ordinary pressures within the range of 80°C to 300°C, preferably in the range of 100°C to 300°C, most preferably in the range of 150°C to 250°C, for 20 minutes to 300 minutes, preferably for 20 minutes to 150 minutes, most preferably for 25 minutes to 60 minutes. For hydrothermal electrolytic treatment, there can be used a method in which a direct current in a quantity of no more than one half the amount of electricity that is required to generate oxygen equivalent to the chemical oxygen demand (COD) of the organic solid pollutant-containing waste by water electrolysis is applied at a temperature not lower than 100°C but not above the critical temperature of the organic solid pollutant-containing waste, and under a pressure sufficient to maintain the liquid phase. In addition, there can be used a method in which a chemical treatment such as acid/alkali treatment, ozone treatment, hypochlorous acid treatment or hydrogen peroxide treatment, as appropriately chosen depending upon a nature of the organic solid pollutants, is applied to improve their solubility in the solvent.

In the case of relying upon mechanical treatment or physical treatment, the organic solid pollutants are reduced to fine particles that have an increased surface area to bring about enhanced contact with the extracellular enzyme from the electrode-active microorganisms. In a case where excess sludge from the aerobic biological treatment vessel or the like is used as the organic solid pollutants, cells in the excess sludge are disrupted by a solubilizing treatment such as mechanical treatment or physical treatment so that soluble substances (solute) within the cells dissolve in the liquid under treatment (solvent), thus becoming susceptible to the decomposing action of the electrode-active microorganisms. In the case of solubilizing treatment by chemical treatment or thermal treatment, not only is solubility of the organic solid pollutants improved but they can also be converted to substances of an even smaller molecular weight, thus becoming more susceptible to a decomposing action of the electrode-active microorganisms. In a case where the organic solid pollutant-containing waste is sewage sludge or some other substance that has sufficient fluidity to be pumpable and which is comparatively homogeneous, solubilizing treatment can be carried out using a hydrothermal electrolytic treatment that performs electrolysis in a subcritical state (a hydrothermal electrolytic method and apparatus; see the pamphlet of WO 99/07641). In the hydrothermal electrolytic treatment, those difficult-to-decompose chromaticity components which are commonly found in thermal treatment of organic wastewater and the like to present a problem can be decomposed (see the official gazette of JP 2003-290740 A) and, at the same time, difficult-to-decompose organic matter can be converted to organic acids of even smaller molecular weight, thus leading to an improvement in a resulting quality of the treated water.

In the treatment method of the present invention, after the solubilizing step but before the solubilized liquid under treatment is fed into the biological power generator, a biological treatment that makes use of the metabolic reaction of anaerobic microorganisms or an enzyme treatment that makes use of the decomposing reaction by an enzyme, or the like may be applied to ensure that the polymeric substances in the solubilized liquid under treatment are converted to substances of an even smaller molecular weight. By performing this treatment for smaller molecular weight substances, the decomposing reaction by anaerobic microorganisms in the anaerobic region of the biological power generator proceeds with greater ease, contributing to an improvement in both treatment efficiency and power generation efficiency.

In addition, the treatment of the present invention may be so adapted that the treated water from the biological power generator is subjected to an aerobic microbial treatment as ordinarily carried our in treatment of water. If desired, part or all of the excess sludge resulting from the aerobic microbial treatment may be returned to the solubilizing step. What is more, the treated water from the biological power generator may be subjected to a post-treatment such as flocculation and precipitation, filtering through activated carbon, phosphate removal, denitrification, or sulfate reduction.

In the treatment method of the present invention, the solubilized liquid under treatment is subjected to a step of biological power generation by microorganisms capable of growth under anaerobic conditions (electrode-active microorganisms). In the biological power generation step, the oxidation reaction of the microorganisms which use the solubilized organic substances as an electron donor in the solubilized liquid under treatment that has been fed into the anaerobic region of the biological power generator, and the reduction reaction which uses the oxygen in the aerobic region as an electron acceptor are allowed to proceed to thereby reduce the pollution load in the solubilized liquid under treatment while generating electricity. In the biological power generation step, the solubilized liquid under treatment is controlled under conditions that can maintain activity of the electrode-active microorganisms occurring in the anaerobic region. For example, by controlling the drop of the pH of the solubilized liquid under treatment within the anaerobic region, the reduced mediator at the anode can be prevented from suffering a drop in the rate of oxidation reaction and a large current density can be obtained even in a continuous operation. The pH in the anaerobic region is preferably maintained in the range of 10.5 to 6.5, more preferably in the range of 9.5 to 6.5, and most preferably in the range of 9.0 to 7.5. By controlling the pH drop in such a way that the pH is maintained within those ranges, the drop in the rate of oxidation reaction at the anode can be inhibited. It is also to be noted that many of the enzymes possessed by microorganisms have optimum pHs near neutrality and too strong an alkalinity may inhibit a reduction reaction of the microorganisms. The alkaline substance that can be used in the present invention to effect pH control in the anaerobic region of the biological power generator may be any substance that shows alkalinity in aqueous solution and preferred examples include alkali metals, alkaline earth metals, as well as hydroxides thereof, salts consisting of a strong base and a weak acid, and ammonia. Also applicable are substances of high alkalinity that show neutral to weakly alkaline pH in aqueous solution but whose aqueous solutions have a buffer action. Preferred examples include borates, phosphates, and carbonates. When the substances mentioned above are to be used as alkaline substances, two or more of them may be added simultaneously. In the anaerobic region of the biological power generator, the temperature of the solubilized liquid under treatment is preferably maintained in the range of 10°C to 70°C, preferably in the range of 20°C to 45°C, and most preferably in the range of 25°C to 35°C.

An apparatus for treating organic solid pollutant-containing waste according to the first aspect of the present invention which relates to the treatment of organic waste comprises:

a solubilizing vessel in which the organic solid pollutants in the organic solid pollutant-containing waste are solubilized to form a solubilized liquid under treatment which contains solubilized organic substances; and

a biological power generator comprising an anaerobic region that is furnished with a liquid-under-treatment receiving inlet for receiving the solubilized liquid under treatment and which contains microorganisms capable of growth under anaerobic conditions and an anode having an electron mediator immobilized thereon and having a standard electrode potential ($E_0'$) in the range of -0.13 V to -0.28 V at pH 7, an aerobic region containing molecular oxygen and a cathode, and a diaphragm that defines the anaerobic region and the aerobic region.

The solubilizing vessel may be provided with a mechanical crushing apparatus such as a mill or a stone mortar, an apparatus such as a sonicator, a steamer, a blaster, a hydrothermal electrolyzer or a heater, or a container equipped with a mechanism for feeding a chemical substance such as an acid, alkali, ozone, hypochlorous acid or hydrogen peroxide, and an agitator.

The biological power generator comprises the anaerobic region which contains the electrode-active microorganisms and the anode having an electron mediator immobilized thereon, the aerobic region containing the cathode, and the diaphragm that defines the anaerobic region and the aerobic region. The anode having an electron mediator immobilized thereon is such that the electron mediator is immobilized on an electrode substrate and it has a standard electrode potential ($E_0'$) in the range of -0.13 V to -0.28 V at pH 7. The anaerobic region is provided with an inlet for receiving the solubilized liquid under treatment. Using as the substrate the solubilized organic substances in the solubilized liquid under treatment that has been fed into the anaerobic region, the electrode-active microorganisms in the anaerobic region proceed with the oxidation reaction whereas in the aerobic region, the reduction reaction which uses oxygen as an electron acceptor is allowed to proceed at the cathode. In this way, the biological power generator promotes the oxidation reaction in the biological reaction system to generate electricity.

If desired, the treatment apparatus of the present invention may be provided with an aerobic microbial treatment vessel that further treats the treated water from the biological power generator. It may also be provided with a mechanism that recovers the excess sludge from the aerobic microbial treatment vessel and returns it to the solubilizing vessel. In this case, part or all of the excess sludge emerging from the aerobic microbial treatment vessel may be returned to the solubilizing step, whereby the difficult-to-decompose organic matter in the excess sludge is solubilized and decomposed as the substrate for the microbial reaction in the anaerobic region in the biological power generator, thus offering the added advantage of reducing the volume of the excess sludge.

It is also possible to provide other post-treatment facilities that receive the treated water from the biological power generator, as exemplified by such treatment facilities as for flocculation and precipitation, filtering through activated carbon, phosphate removal, denitrification, and sulfate reduction.

If desired, a polymer-degradation vessel for further treating the organic substances in the solubilized liquid under treatment to have a smaller molecular weight may be provided between the solubilizing vessel and the biological power generator.

<Treatment for Rendering the Organic polymeric substance-containing Liquid Waste to Have Smaller Molecular Weight>

The second aspect of the present invention for treating organic waste is characterized by rendering organic polymeric substances to have a smaller molecular weight before feeding the waste into the biological power generator. Specifically, it provides a method of treating organic polymeric substance-containing wastewater by making use of a biological power generator comprising an anaerobic region containing electrode-active microorganisms and an anode having an electron mediator immobilized thereon and having a standard electrode potential ($E_0'$) in the range of -0.13 V to -0.28 V at pH 7, an aerobic region containing molecular oxygen and a cathode, and a diaphragm that defines the anaerobic region and the aerobic region, characterized by comprising: a polymer-degradation step in which the organic polymeric substances in the organic polymeric substance-containing liquid waste are reduced in molecular weight to form a liquid under treatment of a smaller molecular weight, and which contains organic substances reduced in molecular weight; and a biological power generation step in which the liquid of smaller molecular weight under treatment is fed into the anaerobic region of the biological power generator so that the oxidation reaction by the microorganisms which use the organic substances reduced in molecular weight within the anaerobic region as an electron donor and the reduction reaction which uses the oxygen within the aerobic region as an electron acceptor are allowed to proceed to thereby reduce the pollution load in the liquid of smaller molecular weight under treatment while generating electricity.

The organic polymeric substance-containing liquid waste is not limited in any particular way as long as it is liquid waste that contains polymeric substances such as soluble proteins, polysaccharides, etc. and examples include wastewater from food processing plants, night soil, etc. In addition, even wastewater containing organic solid waste as exemplified by residues from food processing such as coffee grounds, waste brewer's yeast, and bean curd refuse, as well as leftover food (garbage), waste paper, animal waste, and excess sludge can be treated if the solid waste have been reduced in size to such an extent that they will not prevent the anode from contacting the anaerobic microorganisms within the anaerobic region or if they are soluble.

In the polymer-degradation step, the organic polymeric substances contained in the organic polymeric substance-containing liquid waste, as exemplified by proteins, cellulose, polysaccharides, triglycerides, and higher fatty acids, are preferably reduced in molecular weight by a biological treatment that utilizes the metabolic reaction of anaerobic microorganisms or an enzymatic treatment that utilizes the decomposing reaction by enzymes. The anaerobic microorganisms that can be utilized in the biological treatment may be any anaerobic microorganisms that have the ability to degrade organic polymeric substances (and which are called "organic polymer degrading anaerobic microorganisms") and preferred examples include Clostridium thermocellum, Closdridium stercorarium, Cellulomonas josui, Thermotoga neapolitana, Thermoanaerobacter wiegelii, Coprothermobacter proteolyticus, Coprothermobacter platensis, Caloramator proteoclasticus, Caloramator coolhaasii st. Z, as well as those which produce VFA (volatile fatty acids) from their intermediates, as exemplified by the genera Acetivibrio, Bacteroides, Ruminococcus, Lactobacillus, Sporolactobacillus, Streptococcus, and Biffidobacterium. From a practical viewpoint, an enriched culture of acid fermenting bacteria that are contained in the sludge within the acid fermenting vessel in a two-phase methane generator can preferably be used.

Preferred examples of enzymes that can be used in the enzymatic treatment include cellulase which is a cellulose decomposing enzyme, protease which is a protein decomposing enzyme, and lipase which is a triglyceride decomposing enzyme.

The rendering of the organic polymeric substances to have a smaller molecular weight by the biological or enzymatic treatment does not require expensive chemicals but have only to provide a simple reaction vessel (polymer-degradation vessel) in the biological power generator, thus offering an added advantage of lowering the equipment cost as well as the costs for maintenance and management.

Before it is fed into the anaerobic region of the biological power generator, the organic polymeric substance-containing liquid waste becomes a liquid under treatment of a smaller molecular weight under, and which contains organic substances that have been reduced in molecular weight by the above-described polymer-degradation step. The organic substances that have been reduced in molecular weight are preferably such that monosaccharides and volatile fatty acids that can be readily oxidized by the electrode-active microorganisms are contained as main ingredients; more preferably, they contain small amounts of monosaccharides and volatile fatty acids as the main ingredient; and it is particularly preferred that the carbon source for the electrode-active microorganisms consists essentially of volatile fatty acids. If saccharides occur at high concentrations in the liquid of smaller molecular weight under treatment, acid fermenting microorganisms which produce extracellular polymers of high viscosity will become dominant and the extracellular polymers may sometimes adhere to the anode's surface, undesirably preventing the anode from contacting the electrode-active microorganisms. Another advantage of limiting the carbon source for the electrode-active microorganism to volatile fatty acids is that microorganisms other than the electrode-active microorganisms, for example, those which decompose the organic polymeric substances by a moderate degree to produce intermediate metabolites (e.g., Clostridium thermocellum, Closdridium stercorarium, Cellulomonas josui, Thermotoga neapolitana, Thermoanaerobacter wiegelii, Coprothermobacter proteolyticus, Coprothermobacter platensis, Caloramator proteoclasticus, Caloramator coolhaasii st. Z), as well as those which decompose the intermediate metabolites (e.g., saccharides) to produce volatile fatty acids (e.g., the genera Acetivibrio, Bacteroides, Ruminococcus, Lactobacillus, Sporolactobacillus, Streptococcus, and Biffidobacterium) are suppressed in proliferation to provide ease for the electrode-active microorganisms to become dominant. Volatile fatty acids that can be fed as the substrate for the electrode-active microorganisms are preferably those volatile fatty acids having no more than six carbon atoms which can be readily oxidized by the anaerobic microorganisms in the anaerobic region and examples include formic acid, acetic acid, propionic acid, butyric acid, valeric acid, isovaleric acid, lactic acid, succinic acid, and caproic acid.

In the polymer-degradation step, the pH of the organic polymeric substance-containing liquid waste is preferably controlled to lie in the range of 4.0 to 6.5, especially in the range of 4.5 to 5.5. As the organic polymer decomposing anaerobic microorganisms proceed with acid fermentation using the organic polymeric substances as the substrate, the pH of the liquid of smaller molecular weight under treatment will decrease. If the pH of the organic polymeric substance-containing liquid waste decreases to 4.0 or less, the organic polymer decomposing anaerobic microorganism finds difficulty proceeding with the acid fermentation reaction (reaction for producing volatile fatty acids); under conditions close to neutrality (pH 7), there is high likelihood for the occurrence of mixed acid fermentation which produces acetic acid and various other organic acids and, depending on the type of the substrate used, hydrogen gas may evolve and escape from the liquid phase in the process of realizing a smaller molecular weight. Allowing hydrogen gas to evolve is undesirable not only from the viewpoint of safety management but also from the viewpoint of efficient energy recovery.

If wastewater with high concentrations of organic polymers is supplied, the organic polymers are rapidly reduced in molecular weight and the pH of the liquid of smaller molecular weight under treatment will decrease rapidly. Suppose here that a low-pH liquid of smaller molecular weight under treatment is fed into the anaerobic region of the biological power generator. Since the rate-limiting factor to the overall reaction rate in the method of biological power generation is the oxidation reaction at the anode, the pH of the solution in the anaerobic region of the biological power generator will drop sharply, directly leading to a drop in the quantity of electricity generated. Since the metabolic reaction in the electrode-active microorganisms is an enzymatic reaction, it has a buffering capability against a certain amount of changes in the concentration of hydrogen ion. On the other hand, the oxidation reaction at the anode is a chemical reaction and determined by the concentration of electron mediator and that of hydrogen ion, as expressed by the following equation (1).

[Chemical Formula 1]

$$Mediator_{Red} \leftrightarrow Mediator_{Ox} + e^{-} + H^{+} \qquad Eq. \ (1)$$

(where $Mediator_{Red}$ represents a reduced redox substance, $Mediator_{Ox}$ represents an oxidized redox substance, $e^{-}$ represents an electron, and $H^{+}$ represents a hydrogen ion.)

The equilibrium constant K for the process is expressed by the following equation (2).

[Chemical Formula 2]

$$k = \frac{[MediatorOx][H+]}{[MediatorRed]} \qquad Eq. \ (2)$$

The electron emitted in the above Eq. (1) is discharged from the anode to the outside of the system, so the concentration of hydrogen ions is a factor that largely contributes to the reaction at the anode. According to this principle, the higher the concentration of hydrogen ions, the lower the concentration of the oxidized form of redox substance; as a result, the reaction will readily reach an equilibrium and no more electric current will flow. Hence, it is desirable that the concentration of hydrogen ions in the liquid of smaller molecular weight under treatment to be fed into the biological power generator is not excessively high. In the present invention, if the pH is appropriately controlled in the step of reducing the molecular weight of the organic polymeric substances in the liquid under treatment, there is offered another advantage of providing ease in controlling the pH in the anaerobic region of the biological power generator into which is fed the liquid under treatment that has passed through the polymer-degradation step.

Controlling the pH of the organic polymeric substance-containing liquid waste is preferably carried out by recovering an alkaline solution from the aerobic region of the biological power generator and feeding the recovered alkaline solution into the anaerobic region. This mode has the advantage of cutting the cost of the alkali agent. However, this is not the sole case of the present invention and an alkaline substance may separately be added in the polymer-degradation step. The alkaline substance that can be used for pH control may be any substance that shows alkalinity in aqueous solution and preferred examples include alkali metals, alkaline earth metals, as well as hydroxides thereof, salts consisting of a strong base and a weak acid, and ammonia. Also applicable are substances of high alkalinity that show neutral to weakly alkaline pH in aqueous solution but whose aqueous solutions have a buffer action. Preferred examples include borates, phosphates, and carbonates. When the substances mentioned above are to be used as alkaline substances, two or more of them may be added simultaneously.

As in its first aspect, the present invention according to the second aspect which relates to the treatment of organic waste may be so adapted that the treated water from the biological power generator is subjected to a post-treatment such as flocculation and precipitation, filtering through activated carbon, phosphate removal, denitrification or sulfate reduction. If liquid waste containing organic solid pollutants such as sludge is used as the organic polymeric substance-containing liquid waste, it is preferably subjected to the polymer-degradation step after the solids are reduced to fine particles by mechanical or physical crushing or their solubility is enhanced by chemical reaction.

In the second aspect of the present invention for the treatment of organic waste, the liquid of smaller molecular weight under treatment is then subjected to the biological power generation step. In the biological power generation step, the oxidation reaction of the microorganisms which use as an electron donor the organic substances that have been reduced in molecular weight in the liquid of smaller molecular weight under treatment that has been fed into the anaerobic region of the biological power generator and the reduction reaction which uses the oxygen in the aerobic region as an electron acceptor are allowed to proceed to thereby reduce the pollution load in the liquid of smaller molecular weight under treatment while generating electricity. In the biological power generation step, the liquid of smaller molecular weight under treatment is controlled under conditions that can maintain the activity of the electrode-active microorganisms occurring in the anaerobic region. For example, by controlling the drop of the pH of the liquid of smaller molecular weight under treatment within the anaerobic region, the reduced mediator at the anode can be prevented from suffering a drop in the rate of oxidation reaction and a large current density can be obtained even in a continuous operation. The pH in the anaerobic region is preferably maintained in the range of 10.5 to 6.5, more preferably in the range of 9.5 to 6.5, and most preferably in the range of 9.0 to 7.5. By controlling the pH drop in such a way that the pH is maintained within those ranges, the drop in the rate of oxidation reaction at the anode can be inhibited. It is also to be noted that many of the enzymes possessed by microorganisms have optimum pHs near neutrality, and too strong an alkalinity may inhibit a reduction reaction of the microorganisms. The alkaline substance that can be used in the present invention to effect pH control in the anaerobic region of the biological power generator may be any substance that shows alkalinity in aqueous solution, and preferred examples include alkali metals, alkaline earth metals, as well as hydroxides thereof, salts consisting of a strong base and a weak acid, and ammonia. Also applicable are substances of high alkalinity that show a neutral to weakly alkaline pH in aqueous solution but whose aqueous solutions have a buffer action. Preferred examples include borates, phosphates, and carbonates. When the substances mentioned above are to be used as alkaline substances, two or more of them may be added simultaneously. A temperature of the liquid of a smaller molecular weight under treatment is maintained in the range of 20°C to 70°C, and preferably in the range of 30°C to 70°C.

An apparatus for treating organic polymeric substance containing liquid waste according to the second aspect of the present invention which relates to the treatment of organic waste comprises:

a polymer-degradation vessel in which organic polymeric substances in organic polymeric substance-containing liquid waste are reduced in molecular weight to form under treatment a liquid of a smaller molecular weight, and which contains organic substances that have been reduced in molecular weight; and

a biological power generator comprising an anaerobic region that is furnished with a receiving inlet for receiving the liquid under treatment of the smaller molecular weight, and which contains microorganisms capable of growth under anaerobic conditions and an anode having an electron mediator immobilized thereon, and having a standard electrode potential ($E_0'$) in the range of -0.13 V to -0.28 V at pH 7, an aerobic region containing molecular oxygen and a cathode, and a diaphragm that defines the anaerobic region and the aerobic region.

The polymer-degradation vessel is not particularly limited in shape and size as long as it is a vessel comprising an inlet for receiving the organic polymeric substance-containing liquid waste, an outlet for discharging the liquid under treatment of the smaller molecular weight, which contains the organic substances that have been reduced in molecular weight, and an optional pH control mechanism for controlling the pH of the fluid being treated for reduction in molecular weight. A preferred pH control mechanism is one that comprises an alkaline solution recovery vessel, which will be described later, that recovers an alkaline solution from the aerobic region of the biological power generator and an alkaline solution supply mechanism for feeding the recovered alkaline solution into the polymer-degradation vessel. Use of this pH control mechanism is particularly advantageous since it is possible to cut not only a required amount of the pH adjusting chemical but also emission of the alkaline solution from the aerobic region of the biological power generator.

The biological power generator comprises the anaerobic region which contains the electrode-active microorganisms, and the anode having an electron mediator immobilized thereon, the aerobic region containing the cathode, and the diaphragm that defines the anaerobic region and the aerobic region. The anode having an electron mediator immobilized thereon is such that the electron mediator is immobilized on an electrode substrate and has a standard electrode potential ($E_0'$) in the range of -0.13 V to -0.28 V at pH 7. The anaerobic region is provided with an inlet for receiving the liquid under treatment of the smaller molecular weight. Using as the substrate the organic substances that have been reduced in molecular weight in the liquid under treatment of smaller molecular weight that has been fed into the anaerobic region, the electrode-active microorganisms in the anaerobic region proceed with the oxidation reaction, whereas in the aerobic region, the reduction reaction which uses oxygen as an electron acceptor is allowed to proceed at the cathode. In this way, the biological power generator promotes the oxidation reaction in the biological reaction system to thereby generate electricity.

It is preferred that the biological power generator further includes a mechanism that controls the pH of the liquid under treatment of smaller molecular weight within the anaerobic region. An applicable pH control mechanism is a common pH control mechanism comprising a pH meter for measuring the pH of the liquid under treatment of smaller molecular weight, a control mechanism for controlling the supply of an alkaline chemical based on the result of measurement with the pH meter, and an alkaline chemical reservoir for holding the alkaline chemical.

If desired, the treating apparatus according to the second aspect of the present invention may include post-treatment equipment for receiving the treated water from the biological power generator, as exemplified by a flocculation and precipitation vessel, an activated carbon assisted filtering vessel, a dephosphorylation vessel, a denitrification vessel, or a sulfate reduction vessel. If liquid waste containing organic solid pollutants such as sludge is used as the organic polymeric substance-containing liquid waste in the treating apparatus of the present invention, a device for reducing solids to fine particles, or for improving solubility, as exemplified by a mechanical crusher (e.g., a stone mortar or a mill), a sonicator, a hydrothermal electrolyzer, or a chemical reaction vessel, is preferably provided between the raw water reservoir and the polymer-degradation vessel.

<Post-treatment>

The third aspect of the present invention which relates to the treatment of organic waste is characterized by including a post-treatment in which the primary treated water as obtained by primary treatment with the biological power generator is further treated.

According to the third aspect of the present invention, there is provided a method of treating organic solid pollutant-containing wastewater by making use of a biological power generator comprising an anaerobic region containing microorganisms capable of growth under anaerobic conditions, and an anode having an electron mediator immobilized thereon and having a standard electrode potential ($E_0$') in the range of -0.13 V to -0.28 V at pH 7, an aerobic region containing molecular oxygen and a cathode, and a diaphragm that defines the anaerobic region and the aerobic region, the method comprising: a biological power generation step in which organic pollutant-containing liquid waste is fed into the anaerobic region of the biological power generator so that the oxidation reaction by the microorganisms which use organic pollutants within the anaerobic region as an electron donor, and the reduction reaction which uses the oxygen within the aerobic region as an electron acceptor are allowed to proceed to thereby reduce a pollution load in the organic pollutant-containing liquid waste while generating electricity; and a post-treatment step in which the pollution load in the treated water as obtained by the biological power generation step is further reduced.

The organic pollutant-containing liquid waste may be any fluid such as liquids, dispersions, suspensions or slurries that contain biodegradable substances, and it may be exemplified by wastewater from food processing plants, night soil, and the like. In addition, organic solid waste as exemplified by residues from food processing such as coffee grounds, waste brewer's yeast, and bean curd refuse, as well as leftover food (garbage), waste paper, animal waste, and excess sludge may be mechanically crushed on a mill or a stone mortar or by sonication, chemically treated with acid, alkali or ozone, or treated by heat or otherwise so that they are dispersed or suspended as fine particles and/or converted to soluble substances, whereupon they assume a state in which they cannot be easily separated from the liquid under treatment; such liquid waste can also be treated. The organic pollutant-containing liquid waste can also be treated after it is preliminarily subjected to a biological treatment to reduce the molecular weight of the pollutants.

The treatment method under consideration comprises two steps, the first for treating the organic pollutants in the biological power generator and the subsequent post-treatment of the treated liquid. First there will be described the biological power generation step which makes use of the biological power generator.

In the treatment method under consideration, the organic pollutant-containing liquid waste is first fed into the biological power generator comprising an anaerobic region that contains microorganisms capable of growth under anaerobic conditions, and an anode having an electron mediator immobilized thereon and having a standard electrode potential ($E_0$') in the range of -0.13 V to -0.28 V at pH 7, an aerobic region containing molecular oxygen and a cathode, and a diaphragm that defines the anaerobic region and the aerobic region, and the organic pollutants in the liquid waste undergo the decomposing action of the anaerobic microorganisms in the anaerobic region, whereupon they are converted to substances of a smaller pollution load. An index preferably used to evaluate the pollution load is at least one member of the group consisting of BOD (biochemical oxygen demand), COD (chemical oxygen demand), nitrogen concentration, and phosphorus concentration, with BOD being particularly preferred.

The biological power generator comprises the anaerobic region which contains the microorganisms capable of growth under anaerobic conditions and the anode having an electron mediator immobilized thereon, the aerobic region containing the cathode, and the diaphragm that defines the anaerobic region and the aerobic region to allow for fluid communication. The anode having the electron mediator immobilized thereon is such that the electron mediator is immobilized on an electrode substrate and it has a standard electrode potential ($E_0$') in the range of -0.13 V to -0.28 V at pH 7. The anaerobic region is provided with a feed inlet through which the organic pollutant-containing liquid waste is fed. Using as the substrate the organic pollutants in the organic pollutant-containing liquid waste that has been fed into the anaerobic region, the anaerobic microorganisms in the anaerobic region proceed with the oxidation reaction whereas in the aerobic region, the reduction reaction which uses oxygen as an electron acceptor is allowed to proceed at the cathode. In this way, the oxidation reaction in the biological reaction system is promoted to generate electricity while, at the same time, the organic substance-containing waste is cleaned by the anaerobic microorganisms. There may be further included the solubilizing treatment and/or the polymer-degradation step that have been explained in connection with the first and second aspects of the present invention which relates to the treatment of organic waste.

We next explain the post-treatment step.

The post-treatment step is preferably at least one member of the group consisting of a flocculation and precipitation step, a filtering step through activated carbon, a decomposition treatment step by means of aerobic microorganisms, a decomposition treatment step by means of anaerobic microorganisms, a denitrification step, a phosphate removal step, an acid decomposing step, and an oxidation and reduction treatment step by means of electrode-active microorganisms; particularly preferred is an oxidation and reduction treatment step by means of electrode-active microorganisms, in which the treated water from the biological power generator is fed into the anaerobic region and both the oxidation reaction of microorganisms that use the organic pollutants in the anaerobic region as an electron donor and the reduction reaction that uses the oxygen in the aerobic region as an electron acceptor are allowed to proceed, thereby reducing the pollution load in the organic pollutant-containing liquid waste.

An applicable flocculation and precipitation step is one that involves the addition of a flocculant such as aluminum sulfate or polyacrylamide. The decomposition treatment step by means of aerobic microorganisms can be performed by aeration, distribution over a trickling filter, or the like; the decomposition treatment step by means of anaerobic microorganisms can utilize methanogenesis or the like. For the denitrification step, a nitrogen removing apparatus may be used that is furnished with a denitrification vessel and a nitrification vessel. For the phosphate removal step, one may typically use a phosphate removing apparatus furnished with an anaerobic vessel and an aerobic vessel, or a phosphorus removing apparatus loaded with phosphate rock; alternatively, one may add magnesium chloride and an alkali. For the oxidative decomposing step, one may use ozone, hydrogen peroxide, potassium permanganate, hydroxy radicals from the Fenton reaction, UV irradiation, and the like.

A post-treatment step that is particularly preferred for the present invention is an oxidation and reduction treatment step by means of electrode-active microorganisms, in which both the oxidization reaction of the microorganisms that use the organic pollutants in the anaerobic region as an electron donor and the reduction reaction that uses the oxygen in the aerobic region as an electron acceptor are allowed to proceed, thereby reducing the pollution load in the organic pollutant-containing liquid waste. The oxidation and reduction treatment step by means of electrode-active microorganisms is preferably performed using the second biological power generator which may be composed in basically the same way as the biological power generator. Using the biological power generator in the post-treatment step is advantageous in that there is no need to use mechanical power for aeration, nor does exist the need for chemicals such as flocculants or activated carbon.

If the second biological power generator is used in the post-treatment step, the anode in it preferably has a higher standard electrode potential ($E_0'$) than the anode in the biological power generator employed in the biological power generation step. By using an anode having a higher standard electrode potential than in the biological power generator employed in the biological power generation step, it becomes easy to remove the organic pollutants to such an extent that the BOD level reaches the low concentration that has been unable to attain by removal in the biological power generation step. In order to make anodes having different standard electrode potentials, one may immobilize different kinds of electron mediator on the anode. Specifically, this can be achieved by ensuring that an electron mediator to be immobilized on the anode in the second biological power generator has a higher standard electrode potential ($E_0'$) than the electron mediator immobilized on the anode in the biological power generator employed in the biological power generation step, for example, a standard electrode potential ($E_0'$) higher than -0.13 V.

The electron mediator that can be immobilized on the anode in the second biological power generator is preferably exemplified by at least one member of the group consisting of anthraquinone derivatives, naphthoquinone derivatives, benzoquinone derivatives, isoalloxazine derivatives, ubiquinone derivatives, cytochrome derivatives, and iron-rich smectite derivatives. Specifically, at least one member is preferably mentioned, as selected from the group consisting of anthraquinone carboxylic acids (AQC), aminoanthraquinones (AAQ), diaminoanthraquinones (DAAQ), anthraquinone sulfonic acids (AQS), diaminoanthraquinone sulfonic acids (DAAQS), anthraquinone disulfonic acids (AQDS), diaminoanthraquinone disulfonic acids (DAAQ DS), ethyl anthraquinones (EAQ), methyl naphtoquinones (MNQ), methyl aminonaphtoquinones (MANQ), bromomethyl aminonaphtoquinones (BrMANQ), dimethyl naphtoquinones (DMNQ), dimethyl aminonaphtoquinones (DMANQ), lapachol (LpQ), hydroxy(methylbutenyl)aminonaphthoquinones (AlpQ), naphthoquinone sulfonic acids (NQS), trimethyl aminobenzoquinones (TMABQ), flavin mononucleotide (FMN), ubiquinone (UQ), 1,4-benzoquinone (1,4-BQ), cytochrome *a*, cytochrome *b*, cytochrome *c*, nontronite, and derivatives thereof.

To immobilize these electron mediators on the anode, the chemical bonding methods shown in Tables 3 and 4 may be adopted as in the case of immobilization on the anode in the biological power generator employed in the biological power generation step if they are quinone-containing substances such as anthraquinone derivatives, naphthoquinone derivatives, benzoquinone derivatives, isoalloxazine derivatives, and ubiquinone derivatives.

A method of immobilizing cytochrome or its derivatives as the electron mediator on the electrode substrate is such that N-succimidyl-3-maleimidopropionic acid is dehydratively condensed on an amino group that has been introduced into an electrically conductive substrate for anode and the thiol group in the cysteine residue of cytochrome is attached nucleophilically to the condensation product for bonding. Specifically, if graphite is used as the electrically conductive substrate, sulfanilic acid and a nitrite are first allowed to act on the graphite to introduce a sulfonic acid group by the diazo coupling reaction. This is then reacted with oxalyl chloride to form sulfonyl chloride, on which a diamine such as 1,3-propandiamine is allowed to act in the solvent THF, thereby introducing an amino group. An equimolar or greater amount of N-succimidyl-3-maleimidopropionic acid is added with respect to the introduced amino group and allowed to react in the presence of dicyclohexyl carbodiimide, whereby an amide bond is formed between the carboxyl group in the N-succimidyl-3-maleimidopropionic acid and the amino group on the graphite to make a monomolecular layer of maleimide. An equimolar or greater amount of cytochrome is added with respect to the immobilized maleimide and the thiol group in the cysteine residue of the cytochrome is nucleophilically attached to the maleimide, whereby the cytochrome can be finally immobilized on the graphite's surface. An applicable method of immobilizing iron-rich smectite comprises crushing it with a ball mill or the like, suspending the particles in either a Nafion (registered trademark of DuPont)/isopropanol solution or a polyacrylic acid/methanol solution, mixing the suspension with a carbon black powder, and applying the mixture to a porous graphite sheet or the like.

The cathode, the diaphragm, and the electrode-active microorganisms in the second biological power generator that can be used in the post-treatment step may have the same constructions as the cathode, the diaphragm and the electrode-active microorganisms in the biological power generator that is utilized in the biological power generation step. It should, however, be noted that the anode-cathode circuit to be installed in the second power generator need not have any power utilizing device connected therebetween but that a conductor wire is preferably used to form a circuit without load or with only an extremely small load being inserted. By forming a circuit without load or with only an extremely small load being inserted, even the electron mediator having a comparatively high standard electrode potential ($E_0$') that is to be installed in the second power generator can be efficiently oxidized at the anode.

Thus, according to the third aspect of the present invention, there is provided an apparatus for treating organic pollutant-containing wastewater that comprises a biological power generator comprising an anaerobic region containing microorganisms capable of growth under anaerobic conditions and an anode having an electron mediator immobilized thereon and having a standard electrode potential ($E_0$') in the range of -0.13 V to -0.28 V at pH 7, an aerobic region containing molecular oxygen and a cathode, and a diaphragm that defines the anaerobic region and the aerobic region; and a post-treatment vessel for further reducing the pollution load in the treated water from the biological power generator.

The post-treatment vessel is preferably at least one member of the group consisting of a flocculation and precipitation vessel, an activated carbon assisted filtering vessel, a vessel for decomposition treatment by aerobic microorganisms, a vessel for decomposition treatment by anaerobic microorganisms, a denitrification vessel, a dephosphorylation vessel, an acid decomposing vessel, and a biological power generating vessel.

EFFECTS OF THE INVENTION

According to the first aspect of the present invention for the treatment of organic waste, organic solid pollutant-containing waste such as wastewater, liquid waste, night soil, food waste, and sludge that are to be fed into the biological power generator are preliminarily solubilized so that the efficiency of the oxidation-reduction reaction in the biological power generator is ensured to draw electrical energy while purifying the organic solid pollutant-containing waste in a simple and efficient way. If excess sludge from an aerobic microbial treatment vessel in water treatment facilities is used as the organic solid pollutant-containing waste, the present invention also contributes to reducing the volume of excess sludge containing large amounts of difficult-to-decompose organic matter.

In addition, according to the second aspect of the present invention for the treatment of organic waste, organic polymeric substance-containing wastewater such as wastewater, liquid waste, night soil, food waste, and sludge that are to be fed into the biological power generator are preliminarily treated for reduction in molecular weight so that the efficiency of the oxidation-reduction reaction in the biological power generator is ensured to draw electrical energy while purifying the organic polymeric substance-containing wastewater in a simple and efficient way.

Furthermore, according to the third aspect of the present invention for the treatment of organic waste, two conflicting demands, an improved efficiency of water treatment and increased power generation, can be met at the same time. Take, for example, the case where liquid waste containing such substances as cellulose that are biologically decomposed at a comparatively slow rate is continuously treated; with the biological power generator used alone, the reaction for oxidation of the organic matter by microorganisms in the anaerobic region proceeds and the BOD decreases. In particular, at the point in time when the BOD has dropped below 1000 mg/L, a phenomenon is observed such that the oxidation-reduction potential (ORP) in the anaerobic region gradually rises (changes to an oxidative state) while at the same time, less electricity is generated. As the result, the rate of BOD removal decreases, making it difficult to remove the BOD to a sufficiently low concentration. In short, under low BOD conditions, the amount of power generation decreases while at the same time, the rate of the BOD load consumption in the anaerobic region decreases. To unravel the cause of this phenomenon, the present inventors made intensive studies and have obtained the following observation. When the BOD in the anaerobic region decreases, the supply of the reducing power from the organic matter to microorganisms decreases and so does the concentration of reduced nicotinamide adenine dinucleotide (NADH) which is a reducing substance in the bodies of microorganisms. Then, the concentration of the terminal reductase or the extracellular released electron mediator (such as menaquinone derivatives), whichever is in the reduced form, also decreases. In this state, the frequency at which the electron mediator immobilized on the anode is reduced also decreases. Then, on account of the rate limiting of the reduction reaction on the part of the microorganisms, the rate of supply of the reduced electron mediator decreases and so does the amount of an electric current that is produced by the anode which is oxidizing the mediator. Particularly in the case where a substance having a low standard electrode potential ($E_0$') is used as the anode having an electron mediator immobilized thereon, the BOD decreases to afford a lowered reducing power and if the oxidation-reduction potential (ORP) in the anaerobic region rises to a level beyond the oxidation-reduction potential of the anode having an electron mediator immobilized thereon, the electron mediator can no longer exist in the reduced form, with the result that virtually no electric current will flow.

On the other hand, however, in order to obtain the largest possible quantity of electricity from the biological power generator, the potential difference between anode and cathode must be increased and, to this end, the anode having an electron mediator immobilized thereon desirably has a standard electrode potential that is within the range of -0.13 V to -0.28 V but which is as close as possible to -0.28 V. Consequently, there exist two conflicting demands: in order to lower the BOD concentration in the treated water, the anode having an electron mediator immobilized thereon should have the highest possible standard electrode potential, but in order to ensure that the power generator will generate a large quantity of electricity, the anode having an electron mediator immobilized thereon desirably have the lowest possible standard electrode potential.

The treatment method and apparatus according to the third aspect of the present invention are characterized in that an anode having an electron mediator immobilized thereon and which has a low standard electrode potential is employed in the biological power generation step or within the biological power generator so as to secure a high level of power generation whereas an anode having an electron mediator immobilized thereon and which has a high standard electrode potential is employed in the post-treatment step or within the second biological power generator so as to secure a high BOD decomposing ability, with the result that both treated water of good quality and high power generating capability can be realized simultaneously.

A method of treating organic substances using only the biological power generator has the feature that compared to the biological treatment using aerobic microorganisms such as the activated sludge method, a smaller amount of sludge is produced, so excess sludge can be disposed of at a lower cost. On the other hand, however, due to the small quantity of the excess sludge produced, smaller amounts of nitrogen and phosphorus will be incorporated into the excess sludge, occasionally causing higher concentrations of nitrogen and phosphorus to leak into the treated water. According to the treatment methods and apparatuses of the present invention, the treated water from the biological power generation apparatus may be treated in the post-treatment step or in the post-treatment vessel, whereby the treated water can be deprived of nitrogen and phosphorus.

As described above, according to the present invention, a simple apparatus is capable of efficient treatment of waste- water containing organic pollutants such as sludge, wastewater, night soil, food waste, and sludge while producing electrical energy; what is more, treated water with a biological oxygen demand (BOD) of less than 120 mg/L which is the uniform standard for emission (daily average) specified by the Water Pollution Prevention Law can be obtained consistently.

BRIEF DESCRIPTIONS OF THE DRAWINGS

[FIG. 1] FIG. 1 is a flow chart depicting a mode of embodiment for the construction of a solid pollutant-containing waste treating apparatus according to the first aspect of the present invention which relates to the treatment of organic waste.
[FIG. 2] FIG. 2 is a conceptual diagram showing the basic construction of the biological power generator of the present invention.
[FIG. 3] FIG. 3 is a diagram showing in concept a biological power generator which is a unitary assembly of the biological power generator shown in FIG. 2.
[FIG. 4] FIG. 4 shows in section an example of the cathode structure in the biological power generator.
[FIG. 5] FIG. 5 is a flow chart depicting another mode of embodiment for the construction of the organic solid pollutant-containing waste treating apparatus according to the first aspect of the present invention.
[FIG. 6] FIG. 6 is a flow chart depicting another mode of embodiment for the construction of the organic solid pollutant-containing waste treating apparatus according to the first aspect of the present invention.

[FIG. 7] FIG. 7 shows in concept the experimental biological power generator used in the Examples.

[FIG. 8] FIG. 8 is a flow chart depicting a mode of embodiment for the construction of an organic polymeric substance-containing liquid waste treating apparatus according to the second aspect of the present invention which relates to the treatment of organic waste.

[FIG. 9] FIG. 9 is a flow chart depicting another mode of embodiment for the construction of the organic polymeric substance-containing liquid waste treating apparatus according to the second aspect of the present invention.

[FIG. 10] FIG. 10 is a structural conceptual diagram showing a mode of embodiment for an organic pollutant-containing liquid waste treating apparatus according to the third aspect of the present invention which relates to the treatment of organic waste.

[FIG. 11] FIG. 11 is a structural conceptual diagram showing another mode of embodiment for the organic pollutant-containing liquid waste treating apparatus according to the third aspect of the present invention.

[FIG. 12] FIG. 12 is a structural conceptual diagram showing yet another mode of embodiment for the organic pollutant-containing liquid waste treating apparatus according to the third aspect of the present invention.

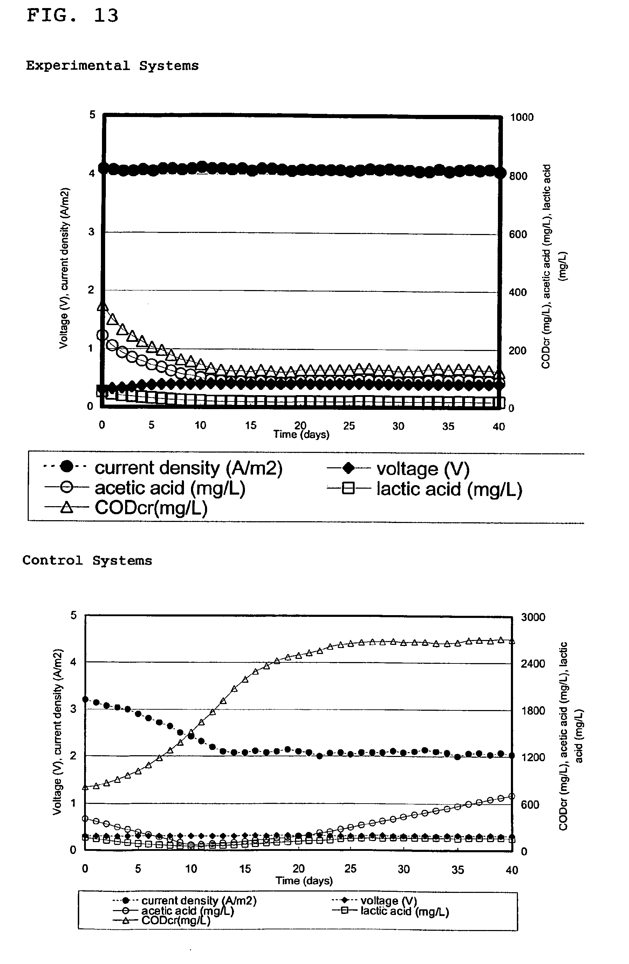

[FIG. 13] FIG. 13 is a pair of graphs showing the results of measurement in Example 3.

LEGEND

1 Organic solid pollutant-containing waste
2 Raw water reservoir
3 Solubilizing vessel
4 Liquid-under-treatment supply piping
5 Biological power generator

    5a Anaerobic region
    5b Aerobic region
    5c Diaphragm

6 Treated water
7 pH adjusting chemical solution reservoir
8, 8a pH controller
10 Alkali solution recovery vessel
11 Secondary treated water
12 Aeration vessel
13 Precipitation vessel
51 Anode (electrode substrate having an electron mediator immobilized thereon)
52 Diaphragm
53 Cathode
53a Catalyst supporting carbon paper

    53b Collector

54 Anaerobic region (microorganism compartment)
55 Aerobic region (air compartment)
64 Air intake port
66 Condensed water drain
103 Polymer-degradation vessel
104 Liquid under treatment of a smaller molecular weight (organic substance of smaller molecular weight) supply piping
63 Excess sludge discharge port
65 Exhaust vent
310 Post-treatment vessel
410 Second power generator

MODES OF EMBODIMENT OF THE INVNTION

On the following pages, various modes of embodiment of the present invention are described in detail with reference to the accompanying drawings but it should be understood that the present invention is in no way limited to those modes.

<Solubilizing treatment>

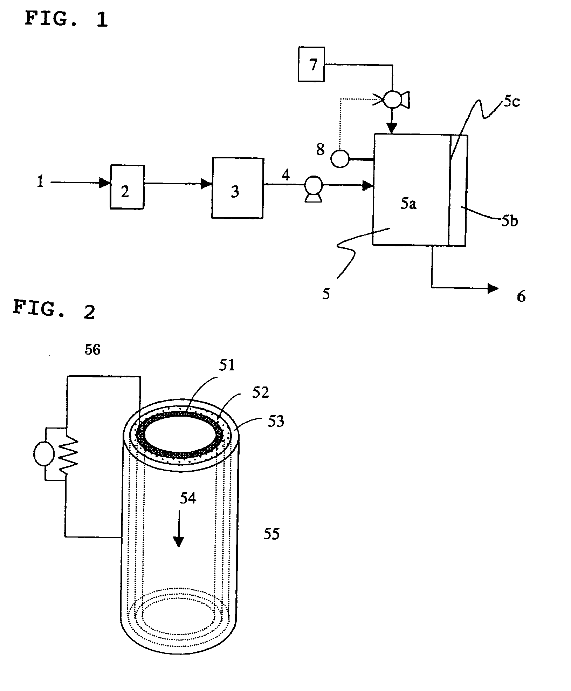

FIG. 1 is a flow chart of an organic solid pollutant-containing waste treating apparatus according to the first aspect of the present invention which relates to the treatment of organic waste. In FIG. 1, the treatment apparatus of the present invention comprises a solubilizing vessel 3 and a biological power generator 5 equipped with an anaerobic region 5a and an aerobic region 5b that are defined by a diaphragm 5c. Connected between the solubilizing vessel 3 and the biological power generator 5 are piping 4 and a pump for feeding a solubilized liquid under treatment to the biological power generator 5. Connected to the anaerobic region 5a of the biological power generator 5 are piping from a pH adjusting chemical reservoir 7 and piping from a pH controller 8. A raw water reservoir 2 for holding organic solid pollutant-containing waste 1 is connected to the solubilizing vessel 3 via piping and a pump. The solubilizing vessel 3 may be a mechanical crushing apparatus such as a mill or a stone mortar, an apparatus such as a sonicator, a steamer, a blaster, a hydrothermal electrolyzer or a heater, or a container equipped with a mechanism for feeding a chemical substance such as an acid, alkali, ozone, hypochlorous acid, or hydrogen peroxide.

FIG. 2 shows a specific example of the biological power generator 5. For instance, the specific example of the biological power generator illustrated in FIG. 2 is in a three-ply tubular form that consists of an anaerobic region 54 containing an anode for biological power generation 51 with an electron mediator immobilized on it, a diaphragm (electrolyte membrane 52), and an aerobic region 55 containing a porous cathode 53. The anaerobic region 54 which is the innermost spaced spatial form of the tube is preliminarily loaded with a solution or suspension containing electrode-active microorganisms (anaerobic). The anaerobic region 54 is charged with a flow of solubilized liquid under treatment that emerges from the solubilizing vessel 3 as it contains solubilized organic substances (sometimes referred to as a "substrate"). The aerobic region 55 which is the outermost spaced spatial form of the tube is filled with air that contains molecular oxygen. The aerobic region 55 is fitted with a means (not shown) for feeding molecular oxygen. The porous cathode 53 provided within the aerobic region 55 is such that at least part of the cathode is formed of an electrically conductive porous material, net-like or fibrous material that have voids in their structure. The diaphragm 52 separating the anaerobic region 54 and the aerobic region 55 is composed of a diaphragm having a large material exchange coefficient, for example, a solid polymer electrolyte membrane such as Nafion (registered trademark) which is a product of DuPont or NEOSEPTA (registered trademark) manufactured by ASTOM.

In the anaerobic region 54, microorganisms proceed with an oxidation reaction using solubilized organic substances as an electron donor whereas in the aerobic region 55, a reduction reaction proceeds with oxygen being used as an electron acceptor. In this way, a potential difference occurs between the anode 51 and the cathode 53. As such, the anode 51 and the cathode 53 are connected to a power utilizing device via a conductor wire 56, whereupon a potential difference current flows; at the same time, ions move between the anaerobic region 54 and the aerobic region 55 through the electrolyte membrane 52 to thereby form a closed circuit. As the reaction proceeds, hydrogen ions evolve in the anaerobic region 54, causing the aqueous solution in the anaerobic region 54 to assume acidity. On the other hand, hydroxide ions evolve in the aerobic region 55, causing the water produced within the aerobic region 55 to become an alkaline solution.

The inside diameter of the tubular element that constitutes a power generating unit may be set at several millimeters to several centimeters, or even several tens of centimeters, depending on the fluidity of the substrate. A power generating unit of the type shown in FIG. 2 may be retained by a support layer or casing of a suitable material so as to increase its physical strength. In this case, the tubular element may in turn be enveloped in an outer shell to form an air compartment in the space between the outer shell and the tubular element, with a means for letting air to flow into and out of the air compartment being formed in the air compartment.

In the mode of embodiment shown in FIG. 2, the anode 51, diaphragm 52 and the cathode 53 are adapted to have a three-layered cylindrical structure, with the anode 51 and the cathode 53 being separated by the diaphragm 52. This structure contributes to increasing the surface areas of the anode 51 and the cathode 53, as well as ensuring efficient contact between the anode 51 and the substrate so as to minimize the dead zone where the substrate does not move; as a result, efficient ion exchange is assured between the anode 51 and the cathode 53; at the same time, the anode 51 and the cathode 53 are electrically insulated, allowing electrons on the solubilized organic substances (substrate) to be delivered to the anode 51 efficiently. In addition, by causing the porous cathode 53 to contact the air, with a contact interface between the air and water occurring within voids in the cathode 53, the efficiency of contact with the oxygen in the air and the water at the water surface can be increased, whereby the reduction reaction of oxygen on the electrode can be allowed to proceed efficiently.

Depending on the use, the anode containing anaerobic region of the biological power generator of a three-layered tubular form as shown in FIG. 2 may be positioned outside and the cathode containing aerobic region positioned inside, with an air passage means being provided in the aerobic region and the whole apparatus being installed within the substrate solution and operated for power generation. If desired, the tubular element may be formed in a particular shape, for instance, a U-shape, with both of its ends protruding from the liquid surface of the substrate solution so that air can flow into the space within the tube. An advantage of this design having the aerobic region formed as the inner tube is that even if the inside diameter of the inner tube formed of the aerobic region is reduced to about several millimeters or less, there is no risk of the occurrence of clogging. The three-layered tubular element may also be adapted such that the inside tubular element provides an aerobic region containing a porous cathode whereas the outside tubular element provides an anaerobic region containing an anode, and this design is advantageous since the outside anode can be made to have a greater surface area than the cathode. The surface area of the anode can be further increased by providing asperities or folds on the anode surface. Regarding the inside diameter across the cathode, which also relates to the reaction efficiency, it may suffice to permit easy passage of air and at least risk for clogging, the inside diameter can be reduced to about several millimeters or less. In this case, the tubular element may in turn be enveloped in an outer shell to form a microbial reaction compartment in the space outside the tubular element through which the substrate can flow, with a means for letting the substrate to flow into and out of the microbial reaction compartment being formed in that compartment.

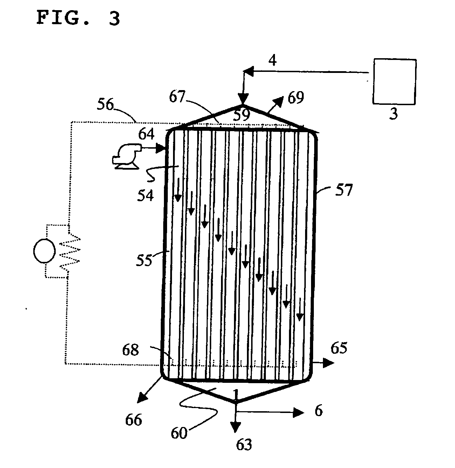

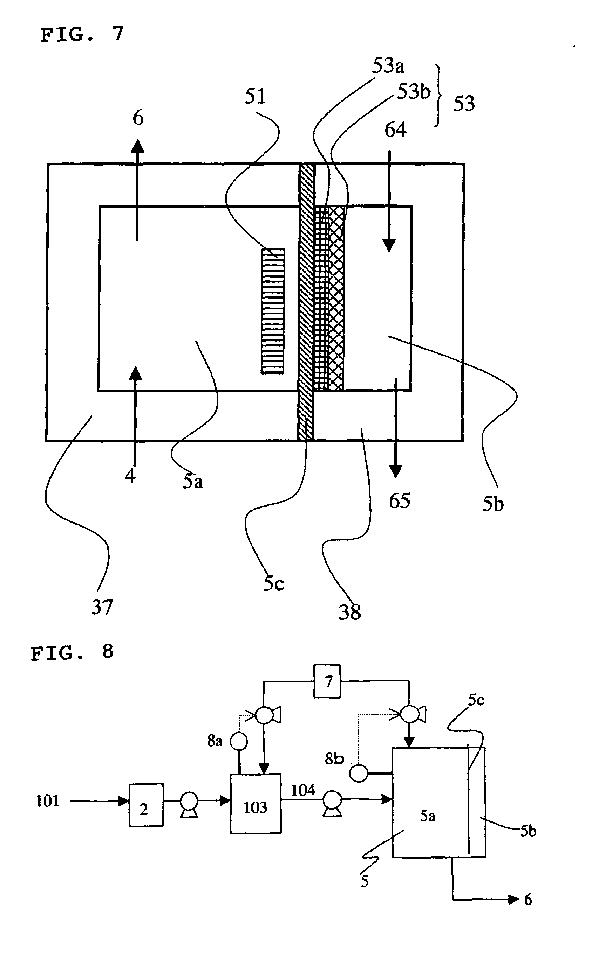

If desired, a plurality of biological power generating units in either the tubular form shown in FIG. 2 or in other form may be placed side by side to compose a biological power generator. For example, FIG. 3 shows a mode in which a plurality of the biological power generating units of the type shown in FIG. 2 are placed side by side, and FIG. 7 shows a mode using a biological power generating unit in plate form (experimental biological power generator).

In the biological power generator shown in FIG. 3, a plurality of three-layered tubular elements (power generating units) which, as shown in FIG. 2, are each composed of an anode 51 as an inner tube, a diaphragm 52, and a cathode 53 as an outer tube, are located within an air compartment 57 formed of an outer shell. The substrate is injected for distribution into the interiors 54 of the plurally arranged power generating units 54 via an inflow section 59 by means of an inflow pump. After undergoing oxidative decomposition therein, the substrate leaves the reaction vessel via an effluent section 60 and is discharged to the outside of the system as a treated liquid 6. The microbial cell bodies and sludge accumulating in the reaction vessel are discharged by opening an excess sludge discharge port 63 with times. In addition, by injecting water, an inert gas, and an anaerobic gas through the same discharge port 63, the inside of the reaction vessel can be back-washed and air-washed. Any anaerobic gas that evolves within the reaction vessel can be discharged through an exhaust vent 69. The evolved anaerobic gas may be stored for use in air washing.

Regarding the porous cathode 53, it may be supplied with oxygen by introducing air into the air compartment 57 via an air intake port 64 using a blower. However, if the use does not require forced ventilation, the air compartment 57 may be removed to construct an apparatus in which the cathode 53 forming the outer tube of each power generating unit contacts external air. The introduced air flows through the space 55 between adjacent power generating units in the air compartment 57 and contacts each cathode 53 before it is discharged through an exhaust vent 65. In addition, the water produced by the reduction reaction at the cathode 53 is either discharged through the exhaust vent 65 as water vapor or is discharged through a condensed water drain 66 as condensed water.

A conductor wire 56 is electrically connected to the inner tubes of the plural power generating units by means of connections 67 to the anodes, and to the outer tubes of the plural power generating units by means of connections 68 to the cathodes 53. In this case, it is necessary that the conductor wire 56 be electrically isolated from the surrounding environment to ensure that neither electrical shorting nor oxidation-reduction on the surface of the conductor wire take place.

The apparatus shown in FIG. 3 may also be adapted in the same way as explained above in connection with FIG. 2, i.e., each power generating unit is constructed as a tubular element such that the cathode forms the inner tube and the anode the outer tube, with air being supplied into the space within each tubular element and with the substrate being brought into contact with the anode outside the tubular element of each power generating unit.

One of the goals to be attained by the cathode is to enhance efficiency of the reduction reaction of oxygen on the electrode. To this end, at least a part of the cathode is preferably formed of an electrically conductive porous material, net-like or fibrous material that have voids in their structure such that the cathode is caused to contact with air, with a contact interface between the air and water occurring within voids in the cathode, whereby an efficiency of contact with the oxygen in the air and the water at the water surface is increased.

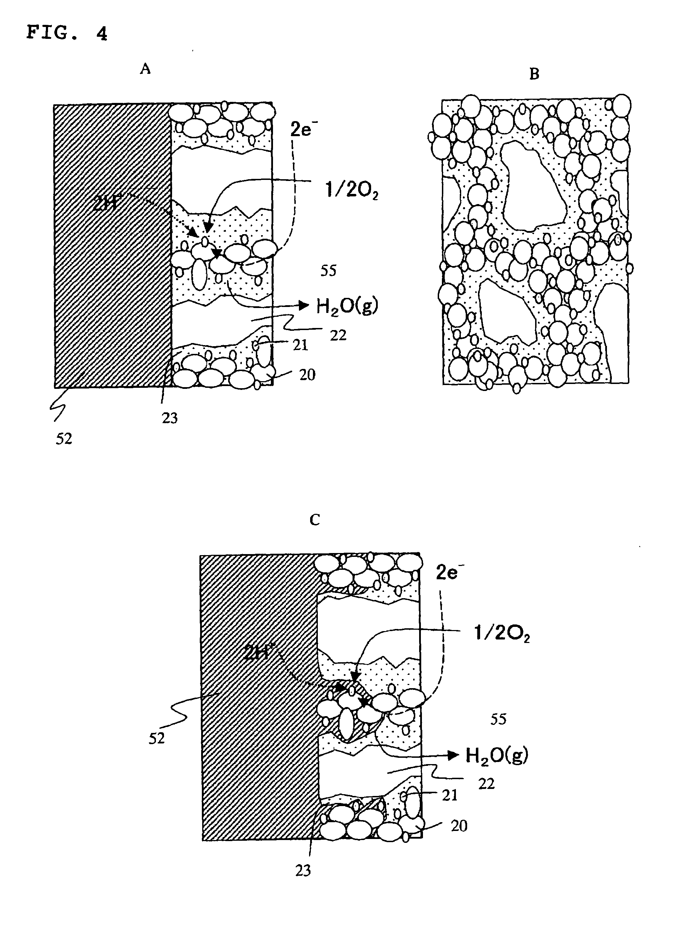

FIG. 4 shows in section an exemplary cathode structure that may be adopted in the biological power generator. FIG. 4(A) shows a section of the structures of the diaphragm 52 and the cathode 53 and FIG. 4(B) is a view of FIG. 4 (A) as viewed from the air compartment 55. Note that the reaction system shown in FIG. 4 is one where the diaphragm 52 is a cation-exchange membrane. The cathode shown in FIG. 4 is of such a structure that a porous matrix 20 has supported thereon a catalyst 21 comprising an alloy or compound that preferably contains at least species selected from among platinoids, silver and transition metal elements (FIG. 4(A)), and it assumes a network structure as seen from the air compartment 55 (FIG. 4(B)). By adopting this structure, the cathode 53 can be brought into contact with the oxygen in the air while the water that is either at the water surface or passing through the diaphragm is drawn up by the hydrophilicity of the substrate, so that an air network 22 and an aqueous solution network 23 are introduced into the microscopic structure of the electrode to thereby increase the area of the air/water contact interface and enhance the efficiency of contact with the oxygen in the air and the water at the water surface. The oxygen reacting with hydrogen ions on the catalyst 21 enables promoting the reduction reaction of the oxygen in the air.

FIG. 4(C) shows in section another exemplary cathode structure that may be adopted in the biological power generator. Again, the reaction system shown in FIG. 4(C) is one where the diaphragm 52 is a cation-exchange membrane. To construct the cathode shown in FIG. 4(C), a solution made of the same materials as the diaphragm 52 is coated on the side of the porous matrix 20 which is joined to the diaphragm 52 and then dried, whereby part of the diaphragm's structure is allowed to get into fine pores in the porous matrix 20. By adopting this structure, the utilization of ion exchange and that of the catalyst can be improved to promote the reduction reaction of the oxygen in the air.

We next describe the method of treating organic solid pollutant-containing waste with the treatment apparatus shown in FIG. 1. In the treatment apparatus shown in FIG. 1, an organic solid pollutant-containing waste 1 is held in the raw water reservoir 2 and then a liquid feed pump is activated to transfer the organic solid pollutant-containing waste 1 into the solubilizing vessel 3. In the solubilizing vessel 3, either one of the means selected from among the mechanical solubilizing treatment by mechanical crushing with a mill or a stone mortar or by ultrasonic crushing, the physical solubilizing treatment by steaming or blasting, the solubilizing treatment by hydrothermal electrolysis, and the solubilizing treatment with a chemical substance such as an acid, alkali, ozone, hypochlorous acid or hydrogen peroxide is applied, whereby the organic solid pollutant-containing waste 1 is converted to a solubilized liquid under treatment that contains solubilized organic substances.

Subsequently, the solubilized liquid under treatment is fed into the anaerobic region 5a of the biological power generator 5 by means of a liquid feed pump. On the other hand, the aerobic region 5b of the biological power generator 5 is supplied with oxygen humidified to have a relative humidity of 100% or oxygen-containing air. In this case, a pump or a fan may be used to pass the oxygen or the oxygen-containing air into the aerobic region 5b of the biological power generator 5 or, alternatively, heat convection may be utilized for the same purpose.

On the basis of the pH, measured with the pH controller 8, of the solubilized liquid under treatment in the anaerobic region 5a of the biological power generator 5, a pH adjusting chemical (acid, alkali, or pH buffer) is supplied from the pH adjusting chemical solution reservoir 7 into the anaerobic region 5a of the biological power generator 5, whereupon the pH of the liquid in the anaerobic region 5a of the biological power generator 5 is maintained within a range of 10.5 to 6.5. The temperature of the solubilized liquid under treatment in the anaerobic region 5a is maintained at a level that maintains the activity of electrode-active microorganisms, for instance, at 10°C to 45°C. Under this condition, the solubilized liquid under treatment is passed through the anaerobic region 5a with a residence time of 24 to 240.

Thereafter, the treated liquid 6 is discharged from the anaerobic region 5a of the biological power generator 5 via a discharge port. Depending on need, the treated liquid 6 may be subjected to a variety of post-treatments (for example, a treatment such as flocculation and precipitation, filtering through activated carbon, treatment with aerobic microorganisms, phosphate removal, denitrification, or sulfate reduction).

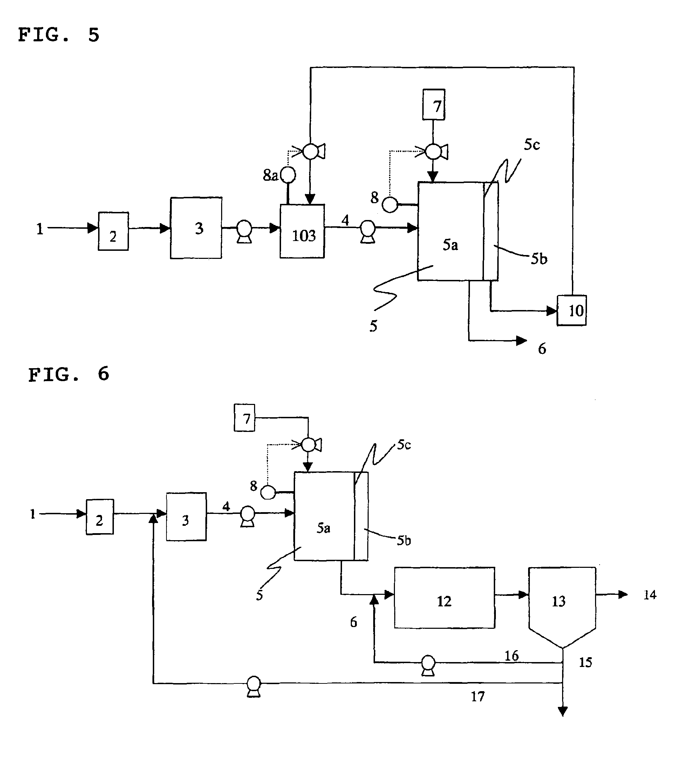

FIG. 5 is a flow chart depicting another mode of embodiment for the treatment apparatus of the present invention. Those parts of the construction which overlap with the treatment apparatus of FIG. 1 will not be explained.

The treatment apparatus shown in FIG. 5 further includes a polymer-degradation vessel 103 between the solubilizing vessel 3 and the biological power generator 5. The polymer-degradation vessel 103 has a pH control mechanism that comprises a pH controller 8a and piping through which an alkaline solution is recovered from the aerobic region 5b of the biological power generator 5 and circulated to the low-molecular-weight realizing vessel 103. Advantageously, water feed piping (not shown) is connected to the aerobic region 5b and piping is also provided such that an alkaline solution as generated within the aerobic region 5b is recovered by overflow into an alkaline solution reservoir 10, and the same alkaline solution is circulated from the alkaline solution reservoir 10 to the polymer-degradation vessel 103 by means of the pH controller 8a which performs control on the basis of a signal from the pH measurement of the solubilized liquid under treatment in the polymer-degradation vessel 103; the pH adjusting chemical reservoir 7 is so constructed that the alkaline solution is fed only to the anaerobic region 5a of the biological power generator 5.

FIG. 6 is a flow chart depicting yet another embodiment of the treatment apparatus of the present invention. Those parts of the construction which overlap the treatment apparatus of FIG. 1 will not be explained.

The treatment apparatus shown in FIG. 6 includes an aeration vessel 12 that receives the treated water 6 from the biological power generator 5 and subjects it to an aeration treatment, a precipitation vessel 13 which receives the treated water after it has been aerated in the aeration vessel 12 and which then performs solid-liquid separation into secondary treated water 14 and sludge 15, piping 16 through which part of the excess sludge 15 that has precipitated in the precipitation vessel 13 is circulated to the aeration vessel 12, and piping 17 for circulating part of the excess sludge 15 to the solubilizing vessel 3. The secondary treated water 14 and the excess sludge 15 that result from the treatment in the precipitation vessel 13 are discharged.

<Polymer-degradation treatment>

FIG. 8 is a flow chart of an apparatus for treating an organic polymeric substance-containing liquid waste according to the second aspect of the present invention which relates to the treatment of organic waste. In FIG. 8, the treatment apparatus of the present invention includes a polymer-degradation vessel 103 and a biological power generator 5 comprising an anaerobic region 5a and an aerobic region 5b that are defined by a diaphragm 5c. Connected between the polymer-degradation vessel 103 and the biological power generator 5 are piping 104 and a pump for feeding a liquid of a smaller molecular weight under treatment to the biological power generator 5. Connected to the polymer-degradation vessel 103 are piping from a pH adjusting chemical reservoir 7 and piping from a pH controller 8a, and connected to the anaerobic region 5a of the biological power generator 5 are piping from the pH adjusting chemical reservoir 7 and piping from a pH controller 8b. A raw water reservoir 2 for holding an organic polymeric substance-containing liquid waste 101 is connected to the polymer-degradation vessel 103 via piping and a pump. The other parts of the system are constructed in the same way as described in connection with the first aspect of the present invention.

Next is described the method of treating the organic polymeric substance-containing liquid waste with the treatment apparatus shown in FIG. 8. In the treatment apparatus shown in FIG. 8, the organic polymeric substance-containing liquid waste 101 is held in the raw water reservoir 2 and then a liquid feed pump is activated to transfer the organic polymeric substance-containing liquid waste 101 into the polymer-degradation vessel 103. In the polymer-degradation vessel 103, organic polymeric substance decomposing anaerobic microorganisms are present and on the basis of the pH, measured with the pH controller 8, of the liquid under treatment in the polymer-degradation vessel 103, a pH adjusting chemical (acid, alkali, or pH buffer) is supplied from the pH adjusting chemical solution reservoir 7 into the polymer-degradation vessel 103, whereupon the pH of the liquid under treatment in the polymer-degradation vessel 103 is maintained within a range of 4.0 to 6.5. The temperature of the liquid under treatment in the polymer-degradation vessel 103 is maintained at a level that maintains the activity of the organic polymeric substance decomposing anaerobic microorganisms, for instance, at a moderate temperature of 30°C to 40°C or at a high temperature of 50°C to 60°C. Under this condition, the organic polymeric substance-containing liquid waste 101 is allowed to stay within the polymer-degradation vessel 103 for 4 hours to 96 hours, whereby the organic polymeric substance decomposing anaerobic microorganisms decompose the organic polymers to monosaccharides, oligo-saccharides, amino acids and peptides, which are further decomposed to volatile organic acids, whereupon a liquid of smaller molecular weight under treatment is formed.

Subsequently, the liquid of smaller molecular weight under treatment is fed into the anaerobic region 5a of the biological power generator 5 by means of a liquid feed pump. On the other hand, the aerobic region 5b of the biological power generator 5 is supplied with oxygen humidified to have a relative humidity of 100% or oxygen-containing air. In this case, a pump or a fan may be used to pass the oxygen or the oxygen-containing air into the aerobic region 5b of the biological power generator 5 or, alternatively, heat convection may be utilized for the same purpose.

On the basis of the pH, measured with the pH controller 8b, of the liquid of smaller molecular weight under treatment in the anaerobic region 5a of the biological power generator 5, a pH adjusting chemical (acid, alkali, or pH buffer) is supplied from the pH adjusting chemical solution reservoir 7 into the anaerobic region 5a of the biological power generator 5, whereupon the pH of the liquid in the anaerobic region 5a of the biological power generator 5 is maintained within a range of 10.5 to 6.5. The temperature of the liquid of smaller molecular weight under treatment in the anaerobic region 5a is maintained at a level that maintains the activity of the electrode-active microorganisms, for instance, at 10°C to 45°C. Under this condition, the liquid of smaller molecular weight under treatment is passed through the anaerobic region 5a with a residence time of 24 hours to 240 hours.

Thereafter, the treated liquid 6 is discharged from the anaerobic region 5a of the biological power generator 5 via a discharge port. Depending on need, the treated liquid 6 may be subjected to a variety of post-treatments (for example, a treatment such as flocculation and precipitation, filtering through activated carbon, treatment with aerobic microorganisms, phosphate removal, denitrification, or sulfate reduction).

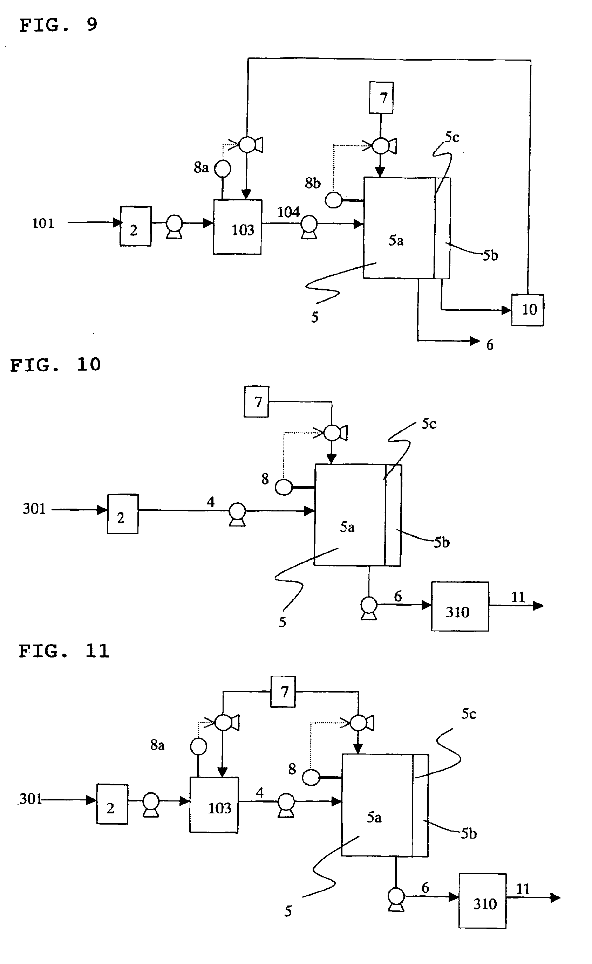

FIG. 9 is a flow chart depicting another mode of embodiment for the treatment apparatus of the present invention. Those parts of the construction which overlap the treatment apparatus of FIG. 8 will not be explained.

The treatment apparatus shown in FIG. 9 further includes a mechanism for recovering an alkaline solution from the aerobic region 5b of the biological power generator 5 and circulating it to the polymer-degradation vessel 103. Specifically, water feed piping (not shown) is connected to the aerobic region 5b and piping is also provided such that an alkaline solution as generated within the aerobic region 5b is recovered by overflow into an alkaline solution reservoir 10 and the same alkaline solution is circulated from the alkaline solution reservoir 10 to the polymer-degradation vessel 103 by means of the pH controller 8 which performs control on the basis of a signal from the pH measurement of the liquid waste 101 in the polymer-degradation vessel 103; the pH adjusting chemical reservoir 7 is so constructed that the alkaline solution is fed only to the anaerobic region 5a of the biological power generator 5.

If the treatment method and apparatus of the present invention are to be used to treat organic solid waste, the solid waste may be reduced to fine particles preliminarily by means of a separate treatment vessel that is provided upstream of the polymer-degradation vessel 103. If desired, a post-treatment device may be provided to perform a further enhanced treatment of the treated liquid 6 that has been discharged from the biological power generator 5. Examples of the post-treatment device that can be used include an activated sludge treatment vessel for further reducing the concentration of organic matter in the treated liquid, a biological treatment vessel for removing nutrient salts such as nitrogen and phosphorus from the treated liquid, or a chemical treatment vessel.

<Post-treatment>

FIG. 10 is a flow chart depicting an apparatus for treating organic pollutant-containing liquid waste according to the third aspect of the present invention which relates to the treatment of organic waste. In FIG. 10, the treatment apparatus of the present invention includes a biological power generator 5 and a post-treatment vessel 310, the biological power generator 5 comprising an anaerobic region 5a and an aerobic region 5b that are defined by a diaphragm 5c. The post-treatment vessel 310, the choice of which depends on the properties of an organic pollutant-containing liquid waste 1, may be a flocculation and precipitation vessel, an activated carbon assisted filtering vessel, an aerobic microbial decomposition vessel, an anaerobic microbial decomposition vessel, a denitrification vessel, a dephosphorylation vessel, or a sulfate reduction vessel. Connected between the biological power generator 5 and the post-treatment vessel 310 are piping 6 and a pump for feeding the treated liquid to the post-treatment vessel 310. Connected to the anaerobic region 5a of the biological power generator 5 are piping from a pH adjusting chemical reservoir 7 and piping from a pH controller 8. The treatment apparatus shown in FIG. 10 is equipped with a raw water reservoir 2 for holding the organic pollutant-containing liquid waste 301, as well as piping and a pump for feeding the organic pollutant-containing liquid waste 301 from the raw water reservoir 2 into the biological power generator 5. The other parts of the system are constructed in the same way as described in connection with the first aspect of the present invention.

Next is described the method of treating the organic pollutant-containing liquid waste with the treatment apparatus shown in FIG. 10. In the treatment apparatus shown in FIG. 10, the organic pollutant-containing liquid waste 301 is held in the raw water reservoir 2 and then a liquid feed pump is activated to feed the organic pollutant-containing liquid waste 301 into the anaerobic region 5a of the biological power generator 5. On the other hand, the aerobic region 5b of the biological power generator 5 is supplied with oxygen humidified to have a relative humidity of 100% or oxygen-containing air. In this case, a pump or a fan may be used to pass the oxygen or the oxygen-containing air into the aerobic region 5b of the biological power generator 5 or, alternatively, heat convection may be utilized for the same purpose.

On the basis of the pH, measured with the pH controller 8, of the organic pollutant-containing liquid waste in the anaerobic region 5a of the biological power generator 5, a pH adjusting chemical (acid, alkali, or pH buffer) is supplied from the pH adjusting chemical solution reservoir 7 into the anaerobic region 5a of the biological power generator 5, whereupon the pH of the liquid in the anaerobic region 5a of the biological power generator 5 is maintained within a range of 10.5 to 6.5. The temperature of the organic pollutant-containing liquid waste in the anaerobic region 5a is maintained at a level that maintains the activity of the electrode-active microorganisms, for instance, at 10°C to 45°C. Under this condition, the organic pollutant-containing liquid waste is passed through the anaerobic region 5a with a residence time of 24 hours to 240 hours.

Thereafter, the treated liquid 6 is discharged from the anaerobic region 5a of the biological power generator 5 via a discharge port into the post-treatment vessel 310, where it is subjected to a post-treatment such as flocculation and precipitation, filtering through activated carbon, aerobic microbial decomposition, anaerobic microbial decomposition, phosphate removal, denitrification or sulfate reduction, whereupon the pollution load index of secondary treated water 311 is reduced to a level below the emission standard.

FIG. 11 is a flow chart depicting another mode of embodiment for the treatment apparatus according to the third aspect of the present invention which relates to the treatment of organic waste. Those parts of the construction which overlap the treatment apparatus of FIG. 10 will not be explained.

The treatment apparatus shown in FIG. 11 further includes a polymer-degradation vessel 103 provided between the raw water reservoir 2 and the biological power generator 5. The polymer-degradation vessel 103 has a pH controller 8a and is connected to piping for feeding an alkaline solution from a pH adjusting chemical reservoir 7. The pH adjusting chemical reservoir 7 feeds an alkali chemical to both the anaerobic region 5a of the biological power generator 5 and the polymer-degradation vessel 103.

Next is described the treatment of an organic pollutant-containing liquid waste 1 in the treatment apparatus shown in FIG. 11. The organic pollutant-containing liquid waste 1 is transferred from the raw water reservoir 2 into the polymer-degradation vessel 103. In the polymer-degradation vessel 103, anaerobic microorganisms capable of decomposing organic pollutants (organic pollutant decomposing anaerobic microorganisms) are present and on the basis of the pH, measured with the pH controller 8a, of the organic pollutant-containing liquid waste 1 in the polymer-degradation vessel 103, a pH adjusting chemical (acid, alkali, or pH buffer) is supplied from the pH adjusting chemical solution reservoir 7 into the polymer-degradation vessel 103, whereupon the pH of the organic pollutant-containing liquid waste 1 in the polymer-degradation vessel 103 is maintained within a range of 4.0 to 6.5. The temperature of the organic pollutant-containing liquid waste 1 in the polymer-degradation vessel 103 is maintained at a level that maintains the activity of the organic pollutant decomposing anaerobic microorganisms, for instance, at 10°C to 45°C. Under this condition, the organic pollutant-containing liquid waste 1 is allowed to stay within the polymer-degradation vessel 103 for 24 hours to 240 hours, whereby the organic pollutant decomposing anaerobic microorganisms decompose the organic pollutants to monosaccharides, oligo-saccharides, amino acids and peptides, which are further decomposed to volatile organic acids, whereupon a liquid under treatment of a smaller molecular weight is formed.

Subsequently, the liquid of smaller molecular weight under treatment is fed into the anaerobic region 5a of the biological power generator 5 by means of a liquid feed pump. On the other hand, the aerobic region 5b of the biological power generator 5 is supplied with oxygen humidified to have a relative humidity of 100% or oxygen-containing air. In this case, a pump or a fan may be used to pass the oxygen or the oxygen-containing air into the aerobic region 5b of the biological power generator 5 or, alternatively, heat convection may be utilized for the same purpose.

On the basis of the pH, measured with the pH controller 8, of the liquid of smaller molecular weight under treatment in the anaerobic region 5a of the biological power generator 5, a pH adjusting chemical (acid, alkali, or pH buffer) is supplied from the pH adjusting chemical solution reservoir 7 into the anaerobic region 5a of the biological power generator 5, whereupon the pH of the liquid in the anaerobic region 5a of the biological power generator 5 is maintained within a range of 10.5 to 6.5. The temperature of the liquid of smaller molecular weight under treatment in the anaerobic region 5a is maintained at a level that maintains the activity of the electrode-active microorganisms, for instance, at 10°C to 45°C. Under this condition, the liquid of smaller molecular weight under treatment is passed through the anaerobic region 5a with a residence time of 24 hours to 240 hours.

Thereafter, the treated liquid 6 is discharged from the anaerobic region 5a of the biological power generator 5 via a discharge port into the post-treatment vessel 310, where it is subjected to a post-treatment as described with reference to FIG. 10, whereupon secondary treated water 311 is obtained.

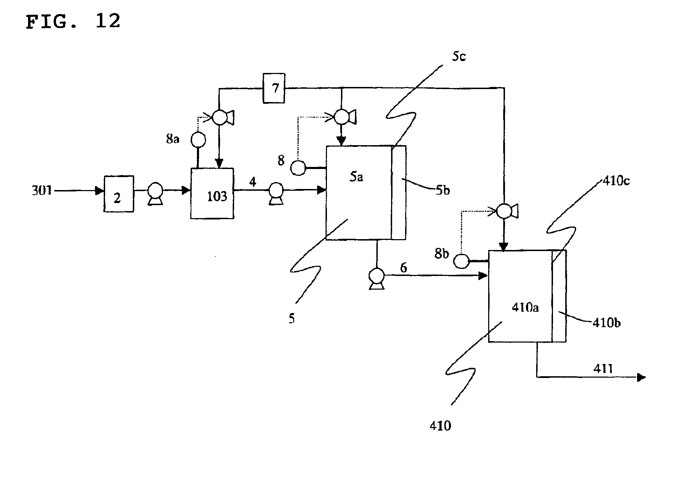

FIG. 12 is a flow chart depicting yet another mode of embodiment for the treatment apparatus according to the third aspect of the present invention which relates to the treatment of organic waste. Those parts of the construction which overlap the treatment apparatuses of FIG. 10 and FIG. 11 will not be explained.

The treatment apparatus shown in FIG. 12 further includes a post-treatment vessel 410 that receives the treated water 6 from the anaerobic region 5a of the biological power generator 5 for post-treatment. The post-treatment vessel 410 is the second biological power generator. The post-treatment vessel 410 is partitioned into an anaerobic region 410a and an aerobic region 410b by a diaphragm 410c. The anaerobic region 410a is provided with an anode (not shown) having an electron mediator immobilized thereon and having a higher standard electrode potential than the anode (not shown) provided in the anaerobic region 5a of the biological power generator 5. The anaerobic microorganisms contained in the anaerobic region 410a may be the same as those used in the biological power generator 5. The diaphragm 410c may also be the same as that used in the biological power generator 5. The aerobic region 410b may also be constructed in the same way as the aerobic region 5b of the biological power generator 5, except that the anode and the cathode are directly wire-connected so that almost all electric power that is generated by transfer of electrons between the anode and cathode is consumed by the oxidation of the electron mediator at the anode. The anaerobic region 410a has connected thereto piping from the pH adjusting chemical reservoir 7 and piping from the pH controller 8b.

The method of treating an organic pollutant-containing liquid waste 1 in the treatment apparatus shown FIG. 12 is performed in the same mode as explained in connection with FIG. 11. The treated water 6 from the anaerobic region 5a of the biological power generator 5 is transferred to the anaerobic region 410a of the post-treatment vessel 410. The pH of the treated water 6 in the anaerobic region 410a of the post-treatment vessel 410 is controlled by the pH controller 8b to be within a range of 6.5 to 10.5. The temperature of the treated water 6 in the anaerobic region 410a is maintained at a level that maintains the activity of the electrode-active microorganisms, for instance, at 10°C to 45°C. Under this condition, the treated water 6 is passed through the anaerobic region 410a with a residence time of 24 hours to 240 hours, whereupon a pollution load index, in particular BOD, of secondary treated water 411 is reduced to a level below the emission standard.

In the illustrated mode of embodiment, the secondary treated water 411 is discharged as it is but if the polluting index of the secondary treated water 411 does not meet the environmental standard, the system may be so modified as to perform a further post-treatment by including piping and a pump for effecting circulation to the post-treatment vessel 410; alternatively, different types of post-treatment vessel 410 may be connected together by means of piping and pumps.

The modes of embodiment shown in FIG. 11 and FIG. 12 employ the polymer-degradation vessel 103 but if desired, the solubilizing vessel 3 may be used in place of, or in addition to, the polymer-degradation vessel 103. In the solubilizing vessel 3, either one of the means selected from among the mechanical solubilizing treatment by mechanical crushing with a mill or a stone mortar or by ultrasonic crushing, the physical solubilizing treatment by steaming or blasting, the solubilizing treatment by hydrothermal electrolysis, and the solubilizing treatment with a chemical substance such as an acid, alkali, ozone, hypochlorous acid or hydrogen peroxide is applied, whereby the organic solid pollutant-containing liquid waste 1 is converted to an organic pollutant-containing liquid waste that contains solubilized organic substances. This mode is advantageous for a case where the organic pollutants are solids that are difficult to dissolve, disperse or suspend in media.

EXAMPLES

In the following pages, the present invention is described specifically by means of examples. It should, however, be understood that the present invention is in no way limited by these examples.

[Example 1] (Heat Treatment)

Using the experimental biological power generator 5 shown in FIG. 7, the treatment apparatus of the present invention shown in FIG. 1 (with the solubilizing vessel 3 being installed upstream of the biological power generator 5) was operated to treat an organic solid pollutant-containing waste (Example 1) and the performance of this system in water treatment and power generation was compared with a case where the organic solid pollutant-containing waste was treated using only the experimental biological power generator 5 shown in FIG. 7 (Control).

<Biological power generator>

As shown in FIG. 7, the biological power generator 5 was a stacked structure (power generating unit) in which a cell frame 37 measuring 200 mm (inside dimension, 180 mm) long on each side and 50 mm (inside dimension, 40 mm) in thickness and serving to form an anode compartment as an anaerobic region was placed adjacent a cell frame 38 measuring 200 mm long on each side and 20 mm in thickness, and serving to form a cathode compartment as an aerobic region. Engraved within the cell frame 38 were columnar gas channels commonly used as the air electrode in fuel cells. Inside the stack of the cell frames 37 and 38, an anode 51, a diaphragm 52 and a cathode 53 were successively bonded by the hot press method (with pressure applied at an elevated temperature of 100°C to 200°C) which is commonly applied for fuel cells, to thereby form an anaerobic region 5a within the cell frame 37 and an aerobic region 5b within the cell frame 38. Although not shown, the anode 51 and cathode 53 were electrically connected by a conductor wire to form a closed circuit with an ammeter (power utilizing device) inserted.
The external circuit including the ammeter in the biological power generator shown in FIG. 7 had a resistance of about 1 $\Omega$, with the internal resistance being approximately 50 $\Omega$. The anaerobic region 5a had 20 mL of an electrode-active microorganism enriched culture added to it before starting the operation.
The anode, diaphragm and the cathode used in Example 1 are described below.

<Anode>

Carbon paper (EC-TP1-060 of Electrochem, Inc.) was used as an anode material, and anthraquinone-2,6-disulfonic acid (AQ-2,6-DS) was used as an electron mediator to be immobilized on the anode.
Commercial AQ-2,6-DS was subjected to reaction for an hour under the 70°C condition in an acetonitrile containing sulfolane and phosphorus oxychloride in amounts corresponding to half a mole with respect to AQ-2,6-DS, whereby the sulfonic acid groups were converted to an acid chloride. The reaction product was filtered under cooling with ice, washed with iced water, and then dried to afford a powder of AQ-2,6-DS chloride.
In a separate step, commercial Vulcan XC-72R (Cabot) carbon black was sampled in 10 g and 10 mmol each of sulfanilic acid and a nitrite was allowed to act on the carbon black, whereupon sulfonic acid groups were introduced into it by the diazo coupling reaction. Using oxalyl chloride, the introduced sulfonic acid groups were converted to sulfonyl chloride. Further, in the solvent THF (tetrahydrofuran), 1,3-propanediamine was acted on the carbon black to introduce amino groups into its surface. The density of the amino groups introduced in the resulting aminated carbon black was determined by titration, giving a value of 500 $\mu$mol/g.
Twenty grams of the resulting aminated carbon black, 100 mmol of the AQ-2,6-DS chloride, and 8 mL of triethylamine were subjected to reaction in the solvent DMF (dimethylformamide) at 50°C for 24 hours, and the reaction product was dried. The dried reaction product was dispersed in an isopropanol solution of 5% Nafion (registered trademark), coated on carbon paper (EC-TP1-060 of Electrochem, Inc.), and dried.
Using the above-mentioned anode with AQ-2,6-DS immobilized on it, an electric potential was applied in an aqueous solution at pH 7 as it was shifted from -0.20 V up to -0.15 V (hydrogen's standard electrode potential) at a rate of 20 mV/sec, whereupon an electric current was produced; hence, it may be concluded that the anode of interest has a standard electrode potential $E_0'$ between -0.20 V and -0.15 V.

<Diaphragm>

A cation-exchange membrane (Nafion 115 manufactured by DuPont: registered trademark of DuPont) was used as the diaphragm 52.

<Cathode>

The cathode 53 was a combination of catalyst-supporting carbon paper 53a and a collector 53b, with the carbon paper 53a being prepared by coating a slurry of platinum-supporting carbon black and an isopropanol solution of 5% Nafion (registered trademark of DuPont) onto carbon paper (EC-TP1-060 of Electrochem, Inc.) and drying the coat.

<Organic solid pollutant-containing waste>

In Example 1, excess sludge collected from a sewage treatment plant was used as an organic solid pollutant-containing waste.

<Electrode-active microorganism enriched culture>

KUROBOKU (Andosol) soil (0.1 g) was used as an inoculum source; the Desulfuromonas medium (Table 5) described in Handbook of Microbial Media (Atlas et al., 1997, CRC Press) was injected in 100 mL into a vial with a capacity of 130 mL and the gas phase was replaced by nitrogen gas; the inoculum was added to the thus treated medium; the vial was then sealed and shake culture was performed under the temperature condition of 28°C; after two weeks, 5 mL of the bacterial liquor obtained was subcultured in a freshly treated vial; this procedure was repeated five times and the bacterial liquor obtained in 10 weeks was used as an electrode-active microorganism enriched culture. Note that the soil as the inoculum source is not particularly limited to Kuroboku soil and may be replaced by loam or silt.
[Table 5]

Table 5 Composition of Desulfuromonas Medium (pH 7.2±0.2)

| Sulfur (colloidal) | | 10 g |
|---|---|---|
| Nutrient Liquid 1 | ($KH_2PO_4$ 1g, $MgCl_2 \cdot 6H_2O$ 0.4 g, $NH_4Cl$ 0.3 g, $CaCl_2 \cdot H_2O$ 0.1 g, 2 mol/L-HCl 4.0 mL) in 1 L | 1 L |
| Nutrient Liquid 3 | ($NaHCO_3$ 10 g) in 100 mL | 20 mL |
| Nutrient Liquid 4 | ($Na_2S \cdot 9H_2O$ 5 g) in 100 mL | 6 mL |
| Nutrient Liquid 5 | (pridoxamine dihydrochlorate 0.01 g, nicotinic acid 4 mg, p-aminobenzoic acid 2 mg, thiamine 2 mg, cyanocobalamin 1 mg, calcium pantothenate 1 mg, biotin 0.5 mg) in 200 mL | 5 mL |
| Nutrient Liquid 2 | (EDTA disodium salt 5.2 g, $CoCl_2 \cdot 6H_2O$ 1.9 g, $Fe_2Cl \cdot 4H_2O$ 1.5 g, $MnCl_2 \cdot 4H_2O$ 1 g, $ZnCl_2$ 0.7 g, $H_3BO_3$ 0.62 g, $Na_4MoO_4 \cdot 2H_2O$ 0.36 g, $NiCl_2 \cdot 6H_2O$ 0.24 g, $CuCl_2 \cdot 2H_2O$ 0.17 g) in 1 L | 1 mL |

<Treatment test>

In Experimental system 1, the sludge as the organic solid pollutant-containing waste was solubilized by 150°C x 30 min heat treatment in the solubilizing vessel 3 before it was fed into the anaerobic region 5a of the biological power generator 5 shown in FIG. 7. In a control system, excess sludge was directly fed into the anaerobic region 5a of the biological power generator 5 shown in FIG. 7.
In the biological power generator 5, no replacemant of the liquid in the anaerobic region (microbial reaction compartment) was carried out for 10 days after the start of operation so that the microorganisms would adhere to the inside walls of the anaerobic region in the process but, instead, the Desulfuromonas medium (Table 5) described in Handbook of Microbial Media (Atlas et al., 1997, CRC Press) was loaded into the anaerobic region 5a (microbial reaction compartment) so that sulfur-reducing bacteria (electrode-active microorganisms) would become predominant (the conditioning period) to provide a condition in preparation for the subsequent system operation.
For a period of 10 days after the start of continuous injection of solubilized liquid under treatment from the solubilizing vessel 3 into the anaerobic region 5a of the biological power generator 5, the biological power generator was operated with the solubilized liquid under treatment staying in the biological power generator 5 for a residence time of 30 days (the fixing period). Starting 60 days after it started to run, the biological power generator was shifted to normal operation with the liquid of smaller molecular weight under treatment staying in the anaerobic region 5a for a residence time of 15 days, during which period the amount of current flowing between anode and cathode and the voltage across the two electrodes were measured.

In Example 1, the cathode and the anode were kept electrically connected at all times including the conditioning and fixing periods.

The influents into the biological power generators in Experimental system 1 and Control system 1 were measured for the solids (TSS) concentration, volatile solids (VSS) concentration, total CODcr (T-CODcr) concentration, and centrifuged (10000 rpm, 15 min) supernatant CODcr (S-CODcr) concentration (in accordance with the Industrial Effluent Test Method under JIS K0102), and they were also subjected to HPLC (SHIMADZU) for measurement of the organic acids concentration in the filtrate; the results of the measurements are shown in Table 6.

[Table 6]

Table 6 Properties of Influents into Biological Power Generators in the Experimental System and the Control System

|  | Experimental System 1 | Control System 1 |
| --- | --- | --- |
| SS (mg/L) | 12,200 | 13,800 |
| VSS (mg/L) | 9,770 | 11,900 |
| T-CODcr (mg/L) | 23,300 | 23,300 |
| S-CODcr (mg/L) | 4,400 | 580 |
| Organic acids (mg/L) | 3,960 | 188 |

The biological power generator was supplied with the solubilized liquid under treatment (Experimental system 1) or sludge as the organic solid sludge substance-containing waste (Control system 1), which were passed through the anaerobic region 5a that had been adjusted to a pH of approximately 7; the treated liquid 6 was then discharged through the treated liquid discharge port. Humidified air adjusted to have a relative humidity of 100% was fed into the aerobic region 5b via the air intake port 64; the humidified air passing through the aerobic region 5b was discharged through the exhaust vent 66. An excess alkaline aqueous solution generated in the aerobic region 5b was washed down by flowing a small amount of water with times and then recovered.

The effective capacity of the apparatus under consideration was 1500 mL for the anaerobic region 5a (microbial reaction compartment) and 500 mL for the aerobic region 5b (air reaction compartment); the feed rate was so adjusted that the liquid under treatment would have a residence time of 15 days and the air a residence time of 1 minute. The total electrode surface area was set at 300 cm$^2$ for both anode and cathode. The experiments were conducted in a constant-temperature bath with 30°C.

In both Experimental system 1 and Control system 1, the current density and voltage gradually changed during a period of about 30 days (approximately twice the residence time) after the start of operation but in Experimental system 1, the current density stabilized at approximately 3.5 A/m$^2$ and the voltage at approximately 0.5 V. In Control system 1, on the other hand, the current density stabilized at about 1.2 A/m$^2$ and the voltage at approximately 0.3 V. The results are shown in Table 7.

[Table 7]

Table 7 Treatment Performance During Stable Operation (Average for 60 Days)

|  | Experimental System 1 | Control System 1 |
| --- | --- | --- |
| Current density (A/m$^2$) | 3.5 | 1.2 |
| Voltage (V) | 0.5 | 0.3 |
| T-CODcr removal (%) | 35.9 | 12.3 |

[Example 2] [Mechanical Treatment]

Using, as in Example 1, the experimental biological power generator 5 shown in FIG. 7, the treatment apparatus shown in FIG. 2 (with the solubilizing vessel 3 and the polymer-degradation vessel 103 being installed upstream of the biological power generator 5) was operated to effect treatment (Experimental system 2) and the performance of this system in water treatment and power generation was compared with the case where treatment was effected with the treatment apparatus shown in FIG. 2, except that it did not include the solubilizing vessel 3 (Control system 2).

<Organic solid pollutant-containing waste>

Coffee grounds were used as an organic solid pollutant-containing waste.

In Experimental system 2, the coffee grounds in the solubilizing vessel 3 were crushed on a stone mortar into particles having an average size of 300 $\mu$m. Then, 10 g of the crushed product was suspended in 1 L of tap water, charged into a jar fermenter (polymer-degradation vessel 103), inoculated with sludge collected from the acid fermentation tank in a garbage treating two-phase methane fermenter, and reduced in molecular weight by treatment at pH of 5.0-6.0 and 35°C for 48 hours at an agitation speed of 50 rpm. In Control system 2, 10 g of coffee grounds were used after being reduced in molecular weight by the same treatment as in Experimental system 2, except that they were not crushed into smaller particles but suspended in 1 L of tap water as it is.

The influents into the biological power generators in Experimental system 2 and Control system 2 were measured for the solids (SS) concentration, volatile solids (VSS) concentration, total CODcr (T-CODcr) concentration, and centrifuged (10000 rpm, 15 min) supernatant CODcr (S-CODcr) concentration, and they were also subjected to HPLC (SHIMADZU) for measurement of the organic acids concentration in the filtrate; the results of the measurements are shown in Table 8.

[Table 8]

Table 8 Properties of Influents into Biological Power Generators in the Experimental System and the Control System

|  | Experimental System 2 | Control System 2 |
| --- | --- | --- |
| SS (mg/L) | 11,190 | 11,835 |
| VSS (mg/L) | 11,160 | 11,580 |
| T-CODcr (mg/L) | 18,135 | 18,135 |
| S-CODcr (mg/L) | 6,480 | 4,275 |
| Organic acids (mg/L) | 3,890 | 1,035 |

As can be seen from Table 8, Experimental system 2 in which the solubilizing treatment was performed is such that the amount of CODcr in the supernatant and that of organic acids in the filtrate increased in comparison with Control system 2. This may lead to the conclusion that the solubilizing treatment contributed to making the organic solid pollutants more readily dispersible or dissolvable in a liquid.

The biological power generator was supplied with the solubilized liquid under treatment (Experimental system 2) or the organic solid sludge substance-containing waste that had not been subjected to the solubilizing treatment (Control system 2); the respective feeds were passed through the anaerobic region 5a that had been adjusted to a pH of approximately 7; the treated liquid 6 was discharged through the treated liquid discharge port. Humidified air adjusted to have a relative humidity of 100% was fed into the aerobic region 5b via the air intake port 64; the humidified air passing through the aerobic region 5b was discharged through the exhaust vent 66. An excess alkaline aqueous solution generated in the aerobic region 5b was washed down by flowing a small amount of water with times and then recovered.

The effective capacity of the apparatus under consideration was 1500 mL for the anaerobic region 5a (microbial reaction compartment) and 500 mL for the aerobic region 5b (air reaction compartment); the feed rate was so adjusted that the liquid under treatment would have a residence time of 40 days and the air a residence time of 1 minute. The total electrode surface was set at 300 cm$^2$ for both anode and cathode. The experiments were conducted in a constant-temperature bath with 30°C.

In both Experimental system 2 and Control system 2, the current density and voltage gradually changed during a period of about 20 days (approximately twice the residence time) after the start of operation but in Experimental system 2, about 20 days after the start of operation and onward, the current density stabilized at approximately 2.2 A/m$^2$ and the voltage at approximately 0.5 V. In Control system 2, on the other hand, the current density stabilized at about 1.2 A/m$^2$ and the voltage at approximately 0.2 V. The results are shown in Table 9.

[Table 9]

Table 9 Treatment Performance During Stable Operation

|  | Experimental System 2 | Control System 2 |
| --- | --- | --- |
| Current density (A/m$^2$) | 2.2 | 1.2 |
| Voltage (V) | 0.5 | 0.2 |
| T-CODcr removal (%) | 77.2 | 42.1 |

[Example 3]

Using, as the biological power generator 5, the experimental biological power generator shown in FIG. 7, the treatment apparatus of the present invention shown in FIG. 8 (with the polymer-degradation vessel being installed upstream of the biological power generator) was operated to treat an organic polymeric substance-containing liquid waste (Experimental system 3) and the performance of this system in water treatment and power generation was compared with the treatment of the organic polymeric substance-containing liquid waste using only the experimental biological power generator shown in FIG. 7 (Control system 3).

<Organic polymer decomposing anaerobic microorganism enriched culture>

To prepare the organic polymer decomposing anaerobic microorganism enriched culture, 50 mL of a medium using glucose as a carbon source and having the composition shown in Table 10 below was injected into a nitrogen-purged 125-mL vial and after adding 1 mL of sludge from two-phase methane fermentation, enrichment culture was performed in a constant-temperature bath with 30°C for 2 days until an acid fermenting bacteria enriched culture was obtained.

[Table 10]

Table 10 Medium Using Glucose as Carbon Source

| Ingredients | (mg) |
|---|---|
| Glucose | 4000 |
| Peptone | 250 |
| Yeast extract | 500 |
| Ammonium chloride | 250 |
| Sodium hydrogencarbonate | 2500 |
| Calcium chloride dihydrate | 100 |
| Dipotassium hydrogenphosphate | 4000 |
| Magnesium chloride hexahydrate | 400 |
| Tap water | 1 L |

<Treatment test>

The above-identified liquid waste from a food plant was put into a jar fermenter (polymer-degradation vessel 103) and inoculated with the enriched culture of organic polymer decomposing anaerobic microorganisms.

In the polymer-degradation vessel 103, the wastewater from a food plant that had been inoculated with the enriched culture of organic polymer decomposing microorganisms was maintained at pH of 5.0-6.0 while it was subjected to reaction at 35°C for 48 hours at an agitation speed of 50 rpm until the organic polymeric substances in the wastewater from a food plant were reduced in molecular weight. The thus obtained liquid of smaller molecular weight under treatment which contained the organic substances of smaller molecular weight was fed into the biological power generator 5 shown in FIG. 7

In the Control system, the liquid waste from a food plant was not passed through the polymer-degradation vessel 103 but was immediately fed into the biological power generator 5 shown in FIG. 7

In the biological power generator 5, no replacemant of the liquid in the anaerobic region (microbial reaction compartment) was carried out for 10 days after the start of operation so that the microorganisms would adhere to the inside walls of the anaerobic region in the process and, instead, the Desulfuromonas medium (Table 5) described in Handbook of Microbial Media (Atlas et al., 1997, CRC Press) was loaded into the anaerobic region 5a (microbial reaction compartment) so that sulfur-reducing bacteria (electrode-active microorganisms) would become predominant (the conditioning period) to provide a condition in preparation for the subsequent system operation.

For a period of 10 days after the start of continuous injection of liquid of smaller molecular weight under treatment from the polymer-degradation vessel 103 into the anaerobic region 5a of the biological power generator 5, the biological power generator was operated with the liquid of smaller molecular weight under treatment staying in the biological power generator 5 for a residence time of 10 days (the fixing period). Starting 20 days after it was started to run, the biological power generator was shifted to normal operation with the liquid of smaller molecular weight under treatment staying in the anaerobic region 5a for a residence time of 5 days, during which period the amount of current flowing between anode and cathode and the voltage across the two electrodes were measured.

In Example 3, the cathode and the anode were kept electrically connected at all times, including the conditioning and fixing periods.

The influents into the biological power generators in Experimental system 3 and Control system 3 (the influent was the liquid of smaller molecular weight under treatment in Experimental system 3) were measured for the CODcr concentration (in accordance with the Industrial Effluent Test Method under JIS K0102), and the concentrations of organic acids in the filtrate were also measured by HPLC (SHIMADZU); the results are shown in Table 11.

[Table 11]

Table 11 Principal Organic Acids and CODcr Concentration in Influents into Biological Power Generators in the Experimental System and the Control System

|  | Experimental System 3 | Control System 3 |
|---|---|---|
| Acetic acid (mg/L) | 3200 | 500 |
| Lactic acid (mg/L) | 1500 | 150 |
| CODcr (mg/L) | 5000 | 6000 |

The biological power generator was supplied with the liquid of smaller molecular weight under treatment (Experimental system 3) or the polymeric substance-containing liquid under treatment (Control system 3), which were passed through the anaerobic region 5a that had been adjusted to a pH of approximately 7; the treated liquid 6 was then discharged through the treated liquid discharge port. Humidified air adjusted to have a relative humidity of 100% was fed into the aerobic region 5b via the air intake port 64; the humidified air passing through the aerobic region 5b was discharged through the exhaust vent 66. An excess alkaline aqueous solution generated in the aerobic region 5b was washed down by flowing a small amount of water with times and then recovered.

The effective capacity of the apparatus under consideration was 1500 mL for the anaerobic region 5a (microbial reaction compartment) and 500 mL for the aerobic region 5b (air reaction compartment); the feed rate was so adjusted that the liquid under treatment would have a residence time of 15 days and the air a residence time of 1 minute. The total electrode surface was set at 300 $cm^2$ for both anode and cathode. The experiments were conducted in a constant-temperature bath with 30°C. With the date of the start of normal operation being designated day zero, the anode-cathode voltage and current density, as well as the CODcr concentration and the concentrations of organic acids (acetic acid and lactic acid) in the treated liquid waste were recorded with times; the results are shown in FIG. 14.

In Experimental system 3, from day zero to day 40 after the start of normal operation, the current density and voltage were stable at approximately 4.0 A/m$^2$ and 0.4 V, respectively; the CODcr concentration was approximately 350 mg/L on the day normal operation started but it then decreased slowly until it reached approximately 100 mg/L at day 20. A steady state then followed and the value remained stable around 100 mg/L.

The acetic acid concentration behaved in a similar way to the CODcr concentration; it gradually decreased from 250 mg/L and reached about 80 mg/L at day 20. A steady state then followed and the value remained stable. The lactic acid concentration was approximately about 50 mg/L at the start of normal operation but it gradually decreased to about 20 mg/L at day 20, with a steady state then following.

Although not shown, the power density per hour (voltage times current divided by electrode area) was approximately about 140 kWh/m$^2$.

In Control system 3, on the other hand, the current density continued to decrease very slowly in the period from day zero to day 15 after the start of normal operation, decreasing from about 3.2 A/m$^2$ to 2.0 A/m$^2$; thereafter, the value was stable at approximately 2.0 A/m$^2$. The voltage was stable at approximately 0.3 V throughout the period of normal operation.

At day zero before the start of normal operation, the CODcr concentration was approximately 800 mg/L but after the start of normal operation, it showed a tendency to increase and rose to about 1600 mg/L at day 7. Thereafter, it increased very slowly and reached approximately 2500 mg/L at day 20, followed by a steady state.

The acetic and lactic acid concentrations were approximately 300 mg/L and 150 mg/L, respectively, at day zero before the start of normal operation but after the start of normal operation, the organic acids began to be consumed and their concentrations decreased. At day 20 and thereafter, the acid fermenting bacteria began to predominate and the organic acids accumulated to increase until day 40.

Although not shown, the power density per unit area of electrode (voltage times current divided by electrode area) was about 52-78 kWh/m$^2$ per hour.

In Experimental system 3, acid fermentation proceeded adequately in the polymer-degradation vessel 103 (the organic polymeric substances had their molecular weight reduced adequately), so the acid fermenting bacteria (organic polymeric substance decomposing microorganisms) were dominated by the sulfur reducing bacteria (electrode-active microorganisms) in the anaerobic region 5a (COD was converted to an electric current at 60%). In Control system 3, on the other hand, the organic polymeric substances were present at high concentration in the anaerobic region 5a, so the acid fermenting bacteria predominated over the sulfur reducing bacteria; as a result, it could be said that the density of the electric current produced began to decrease immediately after the start of normal operation, and the energy in the COD components was converted to electricity at a lower efficiency than in the Experimental system (COD was converted to an electric current at an efficiency of 45%).

Furthermore, in Experimental system 3, the CODcr concentration of the treated water began to decrease immediately after the start of normal operation and dropped to approximately about 120 mg/L in about 10 days. In Control system 3, on the other hand, the CODcr concentration of the treated water began to increase immediately after the start of normal operation and exceeded 2300 mg/L in about 15 days. This shows that the apparatus of the present invention for treating organic polymeric substance-containing wastewater exhibit an extremely high performance in water treatment.

[Examples 4-6]

The experimental biological power generator shown in FIG. 7 was connected to various types of post-treatment vessel, an aerobic biological treatment vessel (Example 4), the second biological power generator (Example 5), or a batchwise activated sludge vessel (Example 6), and these systems were compared for their performance in water treatment and power generation with the case where no post-treatment was carried out (Control system 4).

<Second biological power generator>

Except for the anode, the second biological power generator was constructed in the same way as the biological power generator of FIG. 7 and before starting the operation, 20 mL of an electrode-active microorganism enriched culture was added to the anaerobic region.

Carbon paper (EC-TP1-060 of Electrochem, Inc.) was used as an anode material, and 5-hydroxy-1,4-naphthoquinone (5-H-1,4-NQ) was used as an electron mediator to be immobilized on the anode.

Five grams of 5-H-1,4-NQ of Aldrich was dissolved in 100 mL of 20% (v/v) chlorosulfonic acid/dichloromethane solution and subjected to reaction for 20 hours at room temperature in the presence of 2 mL of conc. sulfuric acid, whereby sulfonic acid chloride groups were introduced.

In a separate step, commercial Vulcan XC-72R (Cabot) carbon black was sampled in 10 g and 10 mmol each of sulfanilic acid and a nitrite was allowed to act on the carbon black, whereupon sulfonic acid groups were introduced into it by the diazo coupling reaction. Using oxalyl chloride, the introduced sulfonic acid groups were converted to sulfonyl chloride. Further, in the solvent THF (tetrahydrofuran), 1,3-propanediamine was acted on the carbon black to introduce amino groups into its surface. The density of the amino groups introduced in the resulting aminated carbon black was determined by titration, giving a value of 500 $\mu$ml/g.

Twenty grams of the resulting aminated carbon black, 100 mmol of 5-H-1,4-NQ chloride, and 8 mL of triethylamine were subjected to reaction in the solvent DMF (dimethylformamide) at 50°C for 24 hours, and the reaction product was dried. The dried reaction product was dispersed in an isopropanol solution of 5% Nafion (registered trademark), coated on carbon paper (EC-TP1-060 of Electrochem, Inc.), and dried.

The anode had a standard electrode potential of -0.10 V.

<Water under treatment: Organic pollutant-containing liquid waste>

The organic pollutant-containing liquid waste was a liquid waste from a food plant having a BOD of 2 g/L that was primarily composed of polysaccharides and which was preliminarily put into a jar fermenter (polymer-degradation vessel) under anaerobic conditions, where it was subjected to a biological treatment for reduction in molecular weight at pH of 5.0-6.0 and 35°C for 48 hours at an agitating speed of 50 rpm. The BOD of the thus prepared influent into the power generator (water under treatment) was stable at about 1.7 g/L.

<Operation of the biological power generator>

No replacemant of the water-under treatment in the anaerobic region (microbial reaction compartment) was carried out for 10 days after the start of operation so that the microorganisms would adhere to the inside walls of the anaerobic region in the process but, instead, the Desulfuromonas medium (Table 5) described in Handbook of Microbial Media (Atlas et al., 1997, CRC Press) was loaded into the anaerobic region 5a (microbial reaction compartment) so that sulfur-reducing bacteria (electrode-active microorganisms) would become predominant (conditioning). For the subsequent 10 days, a fixing operation was performed with the water under treatment staying for a residence time of 10 days, and starting 20 days after it was started to run, the biological power generator was shifted to normal operation with the water under treatment staying in the anaerobic region for a residence time of 3 days, during which period the amount of current flowing between anode and cathode and the voltage across the two electrodes were measured.

In Examples 4-6, the cathode and the anode were kept electrically connected at all times including the fixing period and the variable resistor was so adjusted as to produce a maximum amount of electric power.

The aerobic region 5a was so designed that humidified air adjusted to have a relative humidity of 100% would be fed into it via the air intake port 67 and that the humidified air passing through each aerobic region 5b would be discharged through the exhaust vent 66. An excess alkaline aqueous solution generated in each aerobic region 5b was washed down by flowing a small amount of water with times.

The effective capacity of the biological power generator was 1300 mL for the anaerobic region (microbial reaction compartment) 5a and 200 mL for the aerobic region (air reaction compartment) 5b; the feed rate was so adjusted that the water under treatment would have a residence time of 3 days and the air a residence time of 1 minute. The total electrode surface area was set at 300 cm$^2$ for both anode and cathode. The experiments were conducted in a constant-temperature bath with 30°C.

[Example 4]

In this Example, the biological power generator 5 constructed in the manner described above and a post-treatment vessel 10 were arranged as shown in FIG. 10 and the treated water 6 emerging from the biological power generator 5 during the fixing operation and normal operation was fed into the post-treatment vessel 310 for post-treatment, thereby affording secondary treated water.

The aerobic biological treatment vessel as the post-treatment vessel 310 was constructed in the following way. An aeration vessel with an effective capacity of 1 L was fabricated and equipped with an air-diffusing pipe, through which air was passed from the bottom at a speed of 0.3 L/min. The aeration vessel was charged with 0.5 L of a foamed polypropylene filter medium of Atacs (average bead size, 3 cm) as a microorganism carrier, which was held in position with metal gauze so that it would not flow out of the vessel. In addition, a precipitation vessel with an effective capacity of 1 L was installed downstream of the aeration vessel to ensure that only the supernatant water would be discharged as treated water. The aeration vessel was charged with 100 mL of sludge from an aeration tank in a sewage treatment plant and after adding sodium acetate and ammonium chloride in respective amounts of 0.5 g/L and 50 mg/L, aeration was performed for 5 days.

[Example 5]

In this Example, the biological power generator 5 constructed in the manner described above and a post-treatment vessel 410 were arranged as shown in FIG. 12 and the treated water 6 emerging from the biological power generator 5 during the fixing operation and normal operation was fed into the post-treatment vessel 410 for post-treatment.

The second biological power generator 410 as the post-treatment vessel was run for the conditioning and fixing operations under conditions that complied with those for the conditioning and fixing operations of the biological power generator 5; the treated water 6 from the biological power generator 5 was passed through the second biological power generator 410 for running it in the fixing and normal operating modes, thereby affording secondary treated water.

[Example 6]

In this Example, treated water 6 was further treated by a batchwise activated sludge method with the combination of an anaerobic and an aerobic step. The experimental apparatus for implementing the batchwise activated sludge method was a reaction vessel having an effective capacity of 400 mL, which was charged with 300 mL of activated sludge collected from an aeration tank in a sewage treatment plant; using this system, synthetic sewage having the composition shown in Table 12 was conditioned for 2 weeks by an operation based on the following cycles: raw water flowing in for 15 minutes (9.6 mL/min); agitation for 2 hours; agitation and aeration for 4.5 hours; precipitation for 45 minutes; and water and sludge discharged for 30 minutes. After the end of the conditioning operation, the raw water was switched to the treated water and a batchwise operation was performed in the same manner. After holding it in a reservoir, the treated water was fed into the batchwise activated sludge reaction vessel at appropriate times to obtain secondary treated water.

[Table 12]

Table 12 Composition of Synthetic Sewage (mg/L)

| | |
|---|---|
| Pepton | 200 |
| Glucose | 200 |
| Yeast Extract | 20 |
| NaHCO$_3$ | 150 |
| MgSO$_4$·7H$_2$O | 150 |
| CaCl$_2$·7H$_2$O | 50 |

(continued)

| | |
|---|---|
| Pepton | 200 |
| NaCl | 100 |
| $FeSO_4 \cdot 7H_2O$ | 0.5 |
| $KH_2PO_4$ . | 52.6 |

In Control system 4, the treated water 6 from the biological power generator 5 was collected as such and used as secondary treated water.

<Test>

Where normal operation was carried out for a period of 30 days, the quality of the secondary treated water stabilized at day 10 onward and the BOD concentration of the secondary treated water, as well as its total phosphorus and ortho-phosphorus concentrations were measured in Examples 4-6 and Control system 4; the results are shown in Table 13.

[Table 13]

Table 13 Quality of Secondary Treated Water in Examples and Control System

| | BOD (mg/L) in secondary treated water treated water | Total phosphorus (mg/L) in secondary treated water treated | Orthophosphorus in secondary water |
|---|---|---|---|
| Example 4 (post-treatment with aerobic filter bed) | 11 | 2.4 | 1.6 |
| Example 5 (second biological power generator) | 67 | 3.8 | 1.9 |
| Example 6 (anaerobic-aerobic biological treatment) | 12 | 1.2 | 0.8 |
| Control system 4 (no post-treatment) | 200 | 4.4 | 2.1 |

In Example 4 where treatment with an aerobic filter bed was performed as a post-treatment step, in Example 5 where the post-treatment step was performed using the second biological power generator, and in Example 6 furnished with the batchwise biological treatment vessel having the anaerobic-aerobic step, the quality of the secondary treated water was such that the BOD was consistently no more than 100 mg/L. On the other hand, in Control system 4 which had no post-treatment step, the BOD of the secondary treated water exceeded 150 mg/L which is the uniform standard for emission (daily average) specified by the Water Pollution Prevention Law. Regarding the total phosphorus and ortho-phosphorus, a significant effectiveness in their removal was recognized in Example 6 furnished with the batchwise biological treatment vessel having the anaerobic-aerobic step.

During the normal operation of the biological power generator in Examples 4-6, voltage and the amount of an electric current were recorded and the results are shown in Table 14. As for Example 5, the voltage and the amount of an electric current in the second biological power generator as the post-treatment vessel are also listed.

[Table 14]

Table 14 Electricity Generated in Examples and Control System

| | Average amount of current (mA) | Average voltage generated (mV) | Average power generated (mW) |
|---|---|---|---|
| Example 4 | 66 | 360 | 23.8 |
| Example 5 (biological power generator) | 64 | 370 | 23.7 |

(continued)

| | Average amount of current (mA) | Average voltage generated (mV) | Average power generated (mW) |
|---|---|---|---|
| (second biological power generator) | 7 | 310 | 2.2 |
| Example 6 | 68 | 350 | 23.8 |

In all systems, the power generator produced almost comparable amounts of electricity. In Example 5, power generation was effected using the second biological power generator as the post-treatment vessel, so the amount of electrical power generated by the overall system was about 10% larger than in Examples 4 and 6.

The above results show that the provision of a post-treatment step in the method of generating electrical power while treating wastewater or other waste that contain organic pollutants contributes to further reducing the pollution load in the treated water.

[Example 7]

A system that used the experimental biological power generator shown in FIG. 7 and which substituted porous graphite for carbon paper as an electrically conductive substrate for anode was evaluated for its power generating performance with anodes of different potentials.

The anodes were subjected to the following preliminary treatment: the electrically conductive substrate (porous graphite) was wire-connected to the opposite electrode, with a power supply in between, and immersed in 20% aqueous sulfuric acid and with the graphite serving as anode, electrolytic oxidation reaction was performed at an electrode current density of 30-60 mA/cm$^2$ for a period from 30 minutes to 1 hour. By this treatment, carboxyl and hydroxyl groups were introduced on the graphite surface. The amount of the carboxyl groups introduced can be deduced by measuring, for example, the consumption of sodium hydrogencarbonate.

The graphite to which carboxyl groups were introduced was in turn reacted with diamine to introduce amino groups. Specifically, the graphite sheet to which carboxyl groups were introduced was dipped in dichloromethane and oxalyl chloride in an amount about 100 times the mole of the introduced carboxyl groups and a few drops of dimethylformamide were added; then, reaction was carried out at room temperature for approximately 4 hours under agitation to thereby convert the above-mentioned carboxyl groups into an acid chloride. Thereafter, the graphite sheet was washed with dichloromethane, dried and transferred into the solvent tetrahydrofuran. To the solvent, 1,3-propanediamine was added in about 100 moles as described above and reaction was carried out at room temperature for approximately 12 hours under agitation to thereby introduce amino groups. On the graphite to which amino groups were thus introduced, anthraquinone-2,6-disulfonic acid (AQDS, $E_0' = -185$ mV) (Experimental system 7-1), or Indigo Carmine ($E_0' = -125$ mV) (Control system 7-1) or 5-hydroxy-1,4-naphthoquinone (5-H-1,4-NQ, $E_0' = -3$ mV) (Control system 7-2) was immobilized to use the graphite as an anode.

In other systems, the graphite to which carboxyl groups were introduced was not further treated but 2-methyl-5-amino-1,4-naphthoquinone (2-M-5-A-1,4-NQ) (Experimental system 7-2) or Neutral Red ($E_0' = -325$ mV) (Control system 7-3) was immobilized to the graphite, which was used as an anode.

[Experimental system 7-1]

In Experimental system 7-1, AQDS was used after it was converted to a sulfonyl chloride by the following method.

One mole of AQDS was reacted with 4 moles of sulfolane in 4 moles of the solvent phosphorus oxychloride at 70°C for 24 hours, thereby converting the sulfonic acid groups to a sulfonyl chloride. The product was cooled, filtered, washed first with iced water, then with methanol, and dried to yield a yellow powder of AQDS chloride. The thus prepared AQDS chloride was checked for purity in terms of the size of the sulfonyl chloride peak in FTIR and by elemental analysis.

The graphite to which amino groups were introduced (electrically conductive substrate) was dipped in tetrahydrofuran and under mild agitation, the AQDS chloride prepared by the method described above was added in an excess amount with respect to the amino groups; in the presence of triethylamine in an amount 5 times the mole of the added sulfonyl chloride, reaction was carried out at room temperature for approximately 12 hours, whereby sulfonamide bonds were formed between the graphite and the electron transfer medium. The product was washed with methanol, reacted with water for 24 hours or more, and then dried to yield an anode for biological power generation.

To this anode, an electric potential was applied in an aqueous solution at pH 7, with the applied potential being shifted from -0.25 V to -0.15 V (hydrogen standard electrode potential), whereupon an electric current was generated that was by far greater than the static current that would be observed with untreated graphite; hence, one may conclude that the anode has a standard electrode potential $E_0$' between -0.25 V and -0.15 V.

[Experimental system 7-2]

The graphite to which carboxyl groups were introduced was dipped in dimethylformamide and under mild agitation, 2-M-5-A-1,4-NQ was added in an excess amount (more than 100 mol%) with respect to the carboxyl groups; in the presence of dicyclohexyl carbodiimide, reaction was carried out at room temperature for 72 hours, whereby amide bonds were formed between the amino groups in the 2-M-5-A-1,4-NQ and the carboxyl groups on the graphite so that the electron mediator was immobilized on the graphite surface. The product was washed first with dimethylformamide, then with methanol, and dried to prepare an anode for biological power generation.

To this anode, an electric potential was applied in an aqueous solution at pH 7, with the applied potential being shifted from -0.15 V to -0.13 V (hydrogen standard electrode potential), whereupon an electric current was generated that was by far greater than the static current that would be observed with untreated graphite; hence, one may conclude that the anode has a standard electrode potential $E_0$' between

-    0.15 V and -0.13 V.

[Control system 7-1]

In Control system 7-1, Indigo Carmine was used after it was converted to a sulfonyl chloride by the following method.

One mole of Indigo Carmine was reacted with 4 moles of sulfolane in 4 moles of the solvent phosphorus oxychloride at 70°C for 24 hours, thereby converting the sulfonic acid groups to a sulfonyl chloride. The product was cooled, filtered, washed with iced water and then dried to yield a blue powder of Indigo Carmine chloride.

The graphite to which amino groups were introduced (electrically conductive substrate) was dipped in tetrahydrofuran and under mild agitation, the above-mentioned Indigo Carmine chloride was added in an excess amount (more than 100 mol%) with respect to the amino groups; in the presence of triethylamine in an amount 5 times the mole of the added Indigo Carmine chloride, reaction was carried out at room temperature for approximately 12 hours, whereby sulfonamide bonds were formed between the amino groups and the Indigo Carmine chloride to introduce an electron mediator. The product was washed with methanol, then washed with water, and dried to yield an anode for biological power generation.

To this anode, an electric potential was applied in an aqueous solution at pH 7, with the applied potential being shifted from -0.13 V to -0.10 V (hydrogen standard electrode potential), whereupon an electric current was generated that was by far greater than the static current that would be observed with untreated graphite; hence, one may conclude that the anode has a standard electrode potential $E_0$' between -0.13 V and -0.10 V.

[Control 7-2]

In Control 7-2, 5-H-1,4-NQ was used after it was converted to a sulfonyl chloride by the following method.

Five grams of 5-H-1,4-NQ manufactured by Aldrich was dissolved in 100 mL of 20% (v/v) chlorosulfonic acid/dichloromethane solution and reaction was carried out in the presence of 2 mL of conc. sulfuric acid at room temperature for 20 hours, thereby introducing sulfonic acid chloride groups.

The graphite to which amino groups were introduced (electrically conductive substrate) was dipped in tetrahydrofuran and under mild agitation, the above-mentioned 5-H-1,4-NQ sulfonic acid chloride was added in an excess amount (more than 100 mol%) with respect to the amino groups; in the presence of triethylamine in an amount 5 times the mole of the added 5-H-1,4-NQ sulfonic acid chloride, reaction was carried out at room temperature for approximately 12 hours, whereby sulfonamide bonds were formed between the hydrophilic polymer and 5-H-1,4-NQ to introduce an electron mediator. The product was washed with methanol and dried to yield an anode for biological power generation.

To this anode, an electric potential was applied in an aqueous solution at pH 7, with the applied potential being shifted from -0.10 V to +0.05 V (hydrogen standard electrode potential), whereupon an electric current was generated that was by far greater than the static current that would be observed with untreated graphite; hence, one may conclude that the anode has a standard electrode potential $E_0$' between -0.10 V and +0.05 V.

[Control 7-3]

The graphite to which carboxyl groups were introduced was dipped in dimethylformamide and under mild agitation, Neutral Red was added in an excess amount (more than 100 mol%) with respect to the carboxyl groups; in the presence of dicyclohexyl carbodiimide, reaction was carried out at room temperature for 72 hours, whereby amide bonds were formed between the amino groups in the Neutral Red and the carboxyl groups on the graphite surface to immobilize the electron mediator. The product was washed first with dimethylformamide, then with methanol, and dried to prepare an anode for biological power generation.

To this anode, a potential was applied in an aqueous solution at pH 7, with the applied potential being shifted from -0.45 V to -0.28 V (hydrogen standard electrode potential), whereupon an electric current was generated that was by far greater than the static current that would be observed with untreated graphite; hence, one may well conclude that the anode has a standard electrode potential $E_0$' between -0.45 V and -0.28 V.

<Power generating performance>

Using the anodes prepared in Experimental systems 7-1 and 7-2, as well as in Control systems 7-1, 7-2 and 7-3, power generation tests were performed with the biological power generator shown in FIG. 7, and the results are shown in

Table 15.

In Example 7, a model of water-containing organic substance prepared by mixing 0.01 g/L of a yeast extract in 0.1 mol/L of a glucose solution was used as a substrate solution. No replacemant of the liquid in the anaerobic region (biological reaction compartment) was carried out for 10 days after the start of operation so that the organisms would adhere to the inside walls of the anaerobic region in the process but, instead, the above-mentioned Desulfuromonas medium (Table 5) was loaded into the anaerobic region (biological reaction compartment) so that sulfur-reducing bacteria would become predominant. Starting at day 10 after the start of operation, a fixing operation was performed, with the substrate solution staying for a residence time of 2 days, and starting at day 20 after the start of operation, normal operation was performed with the substrate solution staying in the anaerobic region for a residence time of 500 minutes, during which period the amount of current flowing between anode and cathode and the voltage across the two electrodes were measured. Note that air was fed into the aerobic region with a residence time of 0.5 minutes.

[Table 15]

Table 15 Power Generation Test Results

| Experimental system | Electron mediator immobilized on anode | Anode potential $E_0$' (V) | Average current generated (mA) | Average voltage output (mV) | Average (mW) |
|---|---|---|---|---|---|
| Experiment 7-1 | AQDS | -0.25--0.15 | 84 | 370 | 31 |
| Experiment 7-2 | 2-M-5-A-1,4-NQ | -0.15--0.13 | 41 | 295 | 12 |
| Control 7-1 | Indigo Carmine | -0.13--0.10 | 1.2 | 250 | 0.3 |
| Control 7-2 | 5-H-1,4-NQ | -0.10-+0.05 | 12 | 240 | 2.9 |
| Control 7-3 | Neutral Red | -0.45--0.28 | 1.8 | 380 | 0.7 |

From the results shown in Table 15, it can be seen that in terms of the electrical output produced, the case where the standard electrode potential ($E_0$') of the anode was within the range of from -0.13 to -0.28 V as claimed by the present invention (Experimental systems) was superior to the case where it was outside the claimed range (Control systems) and produced about 4-100 times more power.

Comparing Experimental systems 7-1 and 7-2, the former displayed about 2.6 times more output than the latter; this would be because the standard electrode potential of the anode in Experimental system 7-1 was within the range of -0.25 to -0.15 V whereas that of the anode in Experimental system 7-2 was in a somewhat higher range of -0.15 to -0.13 V. From these results, it can be seen that from the viewpoint of power generating performance, it is advantageous for the standard electrode potential of anode at pH 7 to be set within the range from -0.13 to -0.28 V, preferably within the range from -0.15 V to -0.27 V.

INDUSTRIAL APPLICABILITY

The present invention, if applied to the treatment of organic wastewater and waste containing organic pollutants, as exemplified by wastewater, liquid waste, night soil, food waste and sludge, can produce electrical energy efficiently while treating wastewater or waste that contain organic polymeric substances.

**Claims**

1. A biological power generator comprising:

   an anaerobic region containing microorganisms capable of growth under anaerobic conditions and an anode having an electron mediator immobilized thereon and having a standard electrode potential ($E_0$') in the range of -0.13 V to -0.28 V at pH 7;
   an aerobic region containing molecular oxygen and a cathode; and
   a diaphragm that defines the anaerobic region and the aerobic region.

2. The biological power generator according to claim 1, wherein the anode having an electron mediator immobilized thereon is such that at least one electron mediator selected from the group consisting of anthraquinone derivatives, naphthoquinone derivatives, benzoquinone derivatives, and isoalloxazine derivatives is immobilized on an electrode substrate.

3. The biological power generator according to claim 2, wherein the electron mediator is at least one species selected from the group consisting of anthraquinone carboxylic acids (AQC), aminoanthraquinones (AAQ), diaminoanthraquinones (DAAQ), anthraquinone sulfonic acids (AQS), diaminoanthraquinone sulfonic acids (DAAQS), anthraquinone disulfonic acids (AQDS), diaminoanthraquinone disulfonic acids (DAAQ DS), ethyl anthraquinones (EAQ), methyl naphtoquinones (MNQ), methyl aminonaphtoquinones (MANQ), bromomethyl aminonaphtoquinones (BrMANQ), dimethyl naphtoquinones (DMNQ), dimethyl aminonaphtoquinones (DMANQ), lapachol (LpQ), hydroxy(methylbutenyl)aminonaphthoquinones (AlpQ), naphthoquinone sulfonic acids (NQS), trimethyl aminobenzoquinones (TMABQ), flavin mononucleotide (FMN), and derivatives thereof.

4. A method of treating organic waste by making use of the biological power generator according to any one of claims 1-3.

5. A method of treating organic solid pollutant-containing waste by making use of a biological power generator comprising an anaerobic region containing microorganisms capable of growth under anaerobic conditions and an anode having an electron mediator immobilized thereon and having a standard electrode potential ($E_0$') in the range of -0.13 V to -0.28 V at pH 7, an aerobic region containing molecular oxygen and a cathode, and a diaphragm that defines the anaerobic region and the aerobic region, **characterized by** comprising:

   a solubilizing step in which the organic solid pollutants in the organic solid pollutant-containing waste are solubilized to form a liquid under treatment which contains solubilized organic substances (a solubilized liquid under treatment); and
   a biological power generation step in which the solubilized liquid under treatment is fed into the anaerobic region of the biological power generator so that the oxidation reaction by the microorganisms which use the solubilized organic substances within the anaerobic region as an electron donor, and the reduction reaction which uses the oxygen within the aerobic region as an electron acceptor are allowed to proceed to thereby reduce a pollution load in the solubilized liquid under treatment while generating electricity.

6. The method of treating organic solid pollutant-containing waste according to claim 5, which is **characterized in that** the solubilizing step is performed by at least one method selected from among mechanical crushing, ultrasonic crushing, thermal treatment, hydrothermal electrolytic treatment, acid or alkali treatment, and oxidizing treatment.

7. An apparatus for treating organic solid pollutant-containing waste, **characterized by** comprising:

   a solubilizing vessel in which the organic solid pollutants in the organic solid pollutant-containing waste are solubilized to form a liquid under treatment which contains solubilized organic substances (a solubilized liquid under treatment); and
   a biological power generator comprising an anaerobic region that is furnished with a liquid-under-treatment receiving inlet for receiving the solubilized liquid under treatment and which contains microorganisms capable of growth under anaerobic conditions and an anode having an electron mediator immobilized thereon, and having a standard electrode potential ($E_0$') in a range of -0.13 V to -0.28 V at pH 7, an aerobic region containing molecular oxygen and a cathode, and a diaphragm that defines the anaerobic region and the aerobic region.

8. A method of treating organic polymeric substance-containing wastewater by making use of a biological power generator comprising an anaerobic region containing microorganisms capable of growth under anaerobic conditions and an anode having an electron mediator immobilized thereon and having a standard electrode potential ($E_0$') in a range of -0.13 V to -0.28 V at pH 7, an aerobic region containing molecular oxygen and a cathode, and a diaphragm that defines the anaerobic region and the aerobic region, **characterized by** comprising:

a polymer-degradation step in which the organic polymeric substances in the organic polymeric substance-containing liquid waste are reduced in molecular weight to form a liquid under treatment which contains organic substances reduced in molecular weight (a liquid of smaller molecular weight under treatment); and
a biological power generation step in which the liquid of smaller molecular weight under treatment is fed into the anaerobic region of the biological power generator so that the oxidation reaction by the electrode-active microorganisms which use the organic substances reduced in molecular weight within the anaerobic region as an electron donor and the reduction reaction which uses the oxygen within the aerobic region as an electron acceptor are allowed to proceed to thereby reduce a pollution load in the liquid of smaller molecular weight under treatment while generating electricity.

9. The method of treating organic polymeric substance-containing wastewater according to claim 8, **characterized in that** in the polymer-degradation step, the organic polymeric substances are reduced in molecular weight by a biological treatment that makes use of the metabolic reaction of anaerobic microorganisms or by an enzymatic reaction that makes use of the decomposition reaction by an enzyme.

10. The method of treating organic polymeric substance-containing wastewater according to claim 9, **characterized in that** in the polymer-degradation step, the organic polymeric substances are reduced in molecular weight to become mainly volatile organic acids.

11. The method of treating organic polymeric substance-containing wastewater according to any one of claims 8-10, **characterized in that** in the polymer-degradation step, the pH of the organic polymeric substance-containing liquid waste is controlled to be within a range of 4.0 to 6.5.

12. The method of treating organic polymeric substance-containing wastewater according to claim 11, **characterized in that** in the polymer-degradation step, the pH of the organic polymeric substance-containing liquid waste is controlled by recovering an alkaline solution from the aerobic region of the biological power generator and feeding the recovered alkaline solution into the anaerobic region.

13. An apparatus for treating organic polymeric substance-containing wastewater which comprises:

a polymer-degradation vessel in which the organic polymeric substances in the organic polymeric substance-containing waste are reduced in molecular weight to form a liquid of a smaller molecular weight under treatment which contains the organic substances that have been reduced in molecular weight (a liquid under treatment of a smaller molecular weight); and
a biological power generator comprising an anaerobic region that is furnished with a liquid-under-treatment receiving inlet for receiving the liquid of smaller molecular weight under treatment and which contains microorganisms capable of growth under anaerobic conditions and an anode having an electron mediator immobilized thereon and having a standard electrode potential ($E_0$') in the range of -0.13 V to -0.28 V at pH 7, an aerobic region containing molecular oxygen and a cathode, and a diaphragm that defines the anaerobic region and the aerobic region.

14. The apparatus for treating organic polymeric substance-containing wastewater according to claim 13, which further includes:

an alkaline solution recovery vessel which recovers an alkaline solution from the aerobic region; and
an alkaline solution supply mechanism for feeding the recovered alkaline solution into the polymer-degradation vessel.

15. A method of treating organic pollutant-containing wastewater by making use of a biological power generator comprising an anaerobic region containing microorganisms capable of growth under anaerobic conditions and an anode having an electron mediator immobilized thereon and having a standard electrode potential ($E_0$') in the range of -0.13 V to -0.28 V at pH 7, an aerobic region containing molecular oxygen and a cathode, and a diaphragm that defines the anaerobic region and the aerobic region, which comprises:

a biological power generation step in which the organic pollutant-containing liquid waste is fed into the anaerobic region of the biological power generator so that the oxidation reaction by the microorganisms which use the organic pollutants within the anaerobic region as an electron donor and the reduction reaction which uses the oxygen within the aerobic region as an electron acceptor are allowed to proceed to thereby reduce a pollution load in the organic pollutant-containing liquid waste while generating electricity;
and a post-treatment step in which the pollution load in the treated water as obtained by the biological power generation step is further reduced.

16. The method of treating organic pollutant-containing wastewater according to claim 15, wherein the pollution load is evaluated by at least one index selected from among BOD (biochemical oxygen demand), COD (chemical oxygen demand), nitrogen concentration, and phosphorus concentration.

17. The method of treating organic pollutant-containing wastewater according to claim 15 or 16, wherein the post-treatment step is at least one of the group consisting of a flocculation and precipitation step, a filtering step through activated carbon, a decomposition treatment step by means of aerobic microorganisms, a decomposition treatment step by means of anaerobic microorganisms, a denitrification step, a phosphate removal step, an acid decomposing step, and an oxidation and reduction treatment step by means of electrode-active microorganisms.

18. The method of treating organic pollutant-containing wastewater according to claim 15 or 16, wherein the post-treatment step is an oxidation and reduction treatment step by means of electrode-active microorganisms, in which the treated water from the biological power generator is fed into the anaerobic region and both the oxidation reaction of microorganisms that use the organic substances in the treated water in the anaerobic region as an electron donor and the reduction reaction that uses the oxygen in the aerobic region as an electron acceptor are allowed to proceed, thereby reducing the pollution load in the treated water.

19. The method of treating organic pollutant-containing wastewater according to claim 18, wherein the oxidation and reduction treatment step by means of electrode-active microorganisms as the post-treatment step uses a second anode having a higher standard electrode potential than the anode used in the biological power generation step.

20. An apparatus for treating organic pollutant-containing wastewater which comprises:

a biological power generator comprising an anaerobic region containing microorganisms capable of growth under anaerobic conditions and an anode having an electron mediator immobilized thereon and having a standard electrode potential ($E_0$') in the range of -0.13 V to -0.28 V at pH 7, an aerobic region containing molecular oxygen and a cathode, and a diaphragm that defines the anaerobic region and the aerobic region; and
a post-treatment vessel for further reducing a pollution load in the treated water from the biological power generator.

21. The apparatus for treating organic pollutant-containing wastewater according to claim 20, wherein the post-treatment vessel is at least one of the group consisting of a flocculation and precipitation vessel, an activated carbon assisted filtering vessel, a vessel for decomposition treatment by aerobic microorganisms, a vessel for decomposition treatment by anaerobic microorganisms, a denitrification vessel, a dephosphorylation vessel, an acid decomposing vessel, and a biological power generating vessel.

22. The apparatus for treating organic pollutant-containing wastewater according to claim 20, wherein the post-treatment vessel is a second biological power generator comprising an anaerobic region containing electrode-active microorganisms and an anode having an electron mediator immobilized thereon, an aerobic region containing molecular oxygen and a cathode, and a diaphragm that defines the anaerobic region and the aerobic region.

23. The apparatus for treating organic pollutant-containing wastewater according to claim 20, wherein the post-treatment vessel is a second biological power generator comprising an anaerobic region containing electrode-active microorganisms and a second anode having an electron mediator immobilized thereon and having a higher standard electrode potential than the anode having an electrode mediator immobilized thereon in the biological power generator, an aerobic region containing molecular oxygen and a cathode, and a diaphragm that defines the anaerobic region and the aerobic region.

**24.** The apparatus for treating organic pollutant-containing wastewater according to claim 22 or 23, wherein the electron mediator immobilized on the anode in the power generator is at least one species selected from the group consisting of anthraquinone derivatives, naphthoquinone derivatives, benzoquinone derivatives, and isoalloxazine derivatives; and

the electron mediator immobilized on the anode in the second biological power generator is at least one species selected from the group consisting of anthraquinone derivatives, naphthoquinone derivatives, benzoquinone derivatives, isoalloxazine derivatives, ubiquinone derivatives, cytochrome derivatives, and iron-rich smectite derivatives.

**25.** The apparatus for treating organic pollutant-containing wastewater according to claim 22 or 23, wherein the electron mediator immobilized on the anode in the power generator is at least one species selected from the group consisting of anthraquinone carboxylic acids (AQC), aminoanthraquinones (AAQ), diaminoanthraquinones (DAAQ), anthraquinone sulfonic acids (AQS), diaminoanthraquinone sulfonic acids (DAAQS), anthraquinone disulfonic acids (AQDS), diaminoanthraquinone disulfonic acids (DAAQ DS), ethyl anthraquinones (EAQ), methyl naphtoquinones (MNQ), methyl aminonaphtoquinones (MANQ), bromomethyl aminonaphtoquinones (BrMANQ), dimethyl naphtoquinones (DMNQ), dimethyl aminonaphtoquinones (DMANQ), lapachol (LpQ), hydroxy(methylbutenyl)aminonaphthoquinones (AlpQ), naphthoquinone sulfonic acids (NQS), trimethyl aminobenzoquinones (TMABQ), flavin mononucleotide (FMN), and derivatives thereof; and

the electron mediator immobilized on the anode in the second biological power generator is at least one species selected from the group consisting of anthraquinone carboxylic acids (AQC), aminoanthraquinones (AAQ), diaminoanthraquinones (DAAQ), anthraquinone sulfonic acids (AQS), diaminoanthraquinone sulfonic acids (DAAQS), anthraquinone disulfonic acids (AQDS), diaminoanthraquinone disulfonic acids (DAAQ DS), ethyl anthraquinones (EAQ), methyl naphtoquinones (MNQ), methyl aminonaphtoquinones (MANQ), bromomethyl aminonaphtoquinones (BrMANQ), dimethyl naphtoquinones (DMNQ), dimethyl aminonaphtoquinones (DMANQ), lapachol (LpQ), hydroxy(methylbutenyl)aminonaphthoquinones (AlpQ), naphthoquinone sulfonic acids (NQS), trimethyl aminobenzoquinones (TMABQ), flavin mononucleotide (FMN), ubiquinone (UQ), 1,4-benzoquinone (1,4-BQ), cytochrome *a*, cytrochrome *b*, cytochrome *c*, nontronite, and derivatives thereof.

**26.** The apparatus for treating organic pollutant-containing wastewater according to claim 22 or 23, wherein the anode and cathode are directly wire-connected to form a closed circuit in the second biological power generator.

FIG. 1

FIG. 2

FIG. 3

# FIG. 4

A

B

C

FIG. 5

FIG. 6

FIG. 7

FIG. 8

FIG. 9

FIG. 10

FIG. 11

FIG. 12

# FIG. 13

Experimental Systems

Legend:
- ··●·· current density (A/m2)
- —◆— voltage (V)
- —○— acetic acid (mg/L)
- —☐— lactic acid (mg/L)
- —△— CODcr(mg/L)

Control Systems

Legend:
- ··●·· current density (A/m2)
- ··◆·· voltage (V)
- —○— acetic acid (mg/L)
- —☐— lactic acid (mg/L)
- —△— CODcr(mg/L)

## INTERNATIONAL SEARCH REPORT

International application No.

PCT/JP2006/319152

A. CLASSIFICATION OF SUBJECT MATTER
*H01M8/16*(2006.01)i, *B09B3/00*(2006.01)i, *C02F11/00*(2006.01)i, *C02F11/02*
(2006.01)i

According to International Patent Classification (IPC) or to both national classification and IPC

B. FIELDS SEARCHED

Minimum documentation searched (classification system followed by classification symbols)
H01M8/16, B09B3/00, C02F11/00, C02F11/02

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-342412 A (Ebara Corp.), 02 December, 2004 (02.12.04), Claims; examples (Family: none) | 1-26 |
| A | JP 2004-517437 A (Korea Institute of Science and Technology), 10 June, 2004 (10.06.04), Full text & EP 1232123 A & WO 2001/004061 A1 | 1-26 |
| A | JP 2000-133297 A (Canon Inc.), 12 May, 2000 (12.05.00), Full text (Family: none) | 1-26 |

[X] Further documents are listed in the continuation of Box C.    [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 November, 2006 (20.11.06) | 28 November, 2006 (28.11.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/319152

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 2006-81963 A  (Hitachi Kiden Kogyo, Ltd.),<br>30 March, 2006 (30.03.06),<br>Full text<br>(Family: none) | 1-26 |
| P,A | JP 2006-66284 A  (Hitachi Kiden Kogyo, Ltd.),<br>09 March, 2006 (09.03.06),<br>Full text<br>(Family: none) | 1-26 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000133327 A
- JP 2000133326 A
- JP 2002520032 A
- US 4652501 A

- JP 57069667 A
- JP 3022431 B
- WO 9907641 A
- JP 2003290740 A

**Non-patent literature cited in the description**

- **ROLLER et al.** *Journal of Chemical Technology and Biotechnology,* 1984, vol. 34B, 3-12
- **BOND et al.** *SCIENCE,* 2002, vol. 295, 483-485

- **PARK et al.** *Biotechnology Letters,* 2000, vol. 22, 1301-1304
- **ATSUHARU IKEDA.** Book of Abstracts for the 31st Seminar on New Ceramics. 2004